# EUROPEAN PATENT APPLICATION

(11) **EP 2 677 347 A2**
(43) Date of publication of application: **25.12.2013**
(21) Application number: 13170320.9
(22) Date of filing: 03.06.2013
(51) Int. Cl.: G01V 1/34

(54) **Spatial data services**

(30) Priority: 02.06.2012 US 201261654828 P; 02.06.2012 US 201261654829 P; 02.06.2012 US 201261654830 P
(71) Applicant: SCHLUMBERGER TECHNOLOGY B.V., 2514 JG The Hague (NL); Services Petroliers Schlumberger SA, 75007 Paris (FR); Schlumberger Holdings Limited, Tortola 1110 (VG); Prad Research And Development Limited, Tortola 1110 (VG)
(72) Inventor: Jenkins, Chase, Houston, TX Texas 77030 (US); Benum, Trond, 7024 Trondheim (NO)
(74) Representative: Ford, Michael Frederick

(57) **Abstract**

A method can include transmitting a call to a GIS; receiving a response; transmitting search criteria to a search engine based on the response; and receiving search results. A method can include orienting a plane in a view; constructing rays from the plane to a surface in the view; determining a 2D extent based on intersection points of the rays and the surface; transmitting the 2D extent; and responsive thereto, receiving information. A method can include receiving image data for a 2D extent; defining a 2D grid for the 2D extent; generating a texture by assigning the image data to the 2D grid; generating a 3D grid by sampling elevations of a surface and assigning them to the 2D grid; applying the texture to the 3D grid; and rendering the 3D grid with the applied texture. Various other apparatuses, systems, methods, etc., are also disclosed.

## Description

### RELATED APPLICATIONS

This application claims the benefit of and priority to U.S. Provisional Application Serial No. 61/654,828, filed 2 June 2012 (Attorney Docket No. IS12.2655), which is incorporated by reference herein, U.S. Provisional Application Serial No. 61/654,829, filed 2 June 2012 (Attorney Docket No. IS12.2656), which is incorporated by reference herein, and U.S. Provisional Application Serial No. 61/654,830, filed 2 June 2012 (Attorney Docket No. IS12.2659-Prov), which is incorporated by reference herein.

### BACKGROUND

Various types of modules, frameworks, etc., exist for modeling, analyzing, etc., geological formations, reservoirs, sedimentary basins, etc. Various methods, devices, systems, etc., are described herein that pertain to such technologies.

### SUMMARY

A method can include receiving selection data; transmitting a call to a geographic information system (GIS); receiving a response to the call from the GIS; transmitting one or more search criteria to a search engine based at least in part on the response to the call; and receiving search results corresponding at least in part to the one or more search criteria. A method can include orienting a plane in a three-dimensional view rendered to a display; constructing rays from the plane to a surface in the three-dimensional view; determining a two-dimensional extent based at least in part on intersection points of the rays and the surface in the three-dimensional view; transmitting the two-dimensional extent as a call; and responsive to transmitting the call, receiving information based at least in part on the two-dimensional extent. A method can include receiving image data, for a specified two-dimensional extent, from a geographic information system; defining a two-dimensional grid for the specified two-dimensional extent; generating a texture by assigning the image data to the two-dimensional grid; generating a three-dimensional grid by sampling elevations of a seismic surface and assigning the sampled elevations to the two-dimensional grid; applying the texture to the three-dimensional grid; and rendering the three-dimensional grid with the applied texture to a display.

A system can include one or more plugins stored in memory of a computing device and operable in a framework executing on the computing device for performing one or more of: linking the framework to a geographic information system and structuring data from the geographic information system as one or more search criteria for a search engine associated with the framework; determining a two-dimensional extent based on manipulation of a view of a visualization of at least a portion of a three-dimensional model associated with the framework where manipulation of the view defines an orientable planar surface in a three-dimensional space; and linking the framework to a geographic information system and draping image data from the geographic information system on to a seismic surface of a project associated with the framework. Various other apparatuses, systems, methods, etc., are also disclosed.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

Features and advantages of the described implementations can be more readily understood by reference to the following description taken in conjunction with the accompanying drawings.

Fig. 1 illustrates an example system that includes various components for simulating a geological environment;

Fig. 2 illustrates an example of a system;

Fig. 3 illustrates an example of a method;

Fig. 4 illustrates an example of a method with respect to a graphical user interface;

Fig. 5 illustrates an example of a method with respect to a graphical user interface;

Fig. 6 illustrates an example of a method;

Fig. 7 illustrates an example of a method;

Fig. 8 illustrates examples of method;

Fig. 9 illustrates an example of a method;

Fig. 10 illustrates an example of a two-dimensional grid;

Fig. 11 illustrates an example of a three-dimensional grid and a three-dimensional grid with an image draped thereon;

Fig. 12 illustrates examples of methods;

Fig. 13 illustrates an example of a method with respect to a graphical user interface;

Fig. 14 illustrates an example of a method with respect to a graphical user interface;

Fig. 15 illustrates an example of a method with respect to a graphical user interface;

Fig. 16 illustrates an example of a method with respect to a graphical user interface;

Fig. 17 illustrates an example of a method with respect to a graphical user interface;

Fig. 18 illustrates an example of a method with respect to a graphical user interface; and

Fig. 19 illustrates example components of a system and a networked system.

### DETAILED DESCRIPTION

The following description includes the best mode presently contemplated for practicing the described implementations. This description is not to be taken in a limiting sense, but rather is made merely for the purpose of describing the general principles of the implementations. The scope of the described implementations should be ascertained with reference to the issued claims.

Various types of data are available via services such as a geographic information system (GIS) service. As an example, types of data can include image data (e.g., imagery) and geologic data (e.g., spatial data, etc.). Various GIS services include, for example, application programming interfaces (APIs) or other types of mechanisms to gain access to services, data, etc. via a network. Various technologies described herein may optionally access data via a GIS service, for example, via an API call to the GIS service. For example, a framework may include rendering a visualization of a three-dimensional project to a display such that a command may be received to select a location where information associated with that location may be retrieved via a GIS service using an API call (e.g., or other mechanism) and where at least a portion of the retrieved information may be optionally input into a search tool (e.g., as search criteria, a search filter, etc.).

As an example, a framework may include an extent tool that can, for example, generate a two-dimensional extent within a three-dimensional environment (e.g., of a three-dimensional project model). In such an example, the 2D extent may be used by the extent tool (e.g., or another tool associated with the framework) to access GIS data such as GIS imagery. For example, a user may view a 3D environment from a perspective or a point-of-view and the extent tool may calculate an intersection of a line originating in a space nearest the point-of-view with a flat plane representing the Earth's surface such that a point on the Earth's surface may be derived. In such an example, the extent tool may repeat such a process for a set of lines distributed in the space nearest the point-of-view and extending to defined outer edges to obtain a set of intersection points. In turn, minimum and maximum 2D values may be extracted and a 2D extent constructed. As an example, a 2D extent may be coordinate data, for example, that may define a 2D boundary for use in retrieving imagery or other data, for performing a search, etc.

As an example, a GIS service may provide data such as imagery and other data. Such data may include, for example, well locations, block boundaries, and other data relevant to a task, a workstep, workflows, etc. As an example, a framework may include a tool to access seismic data and to render visualizations of such data (e.g., seismic attributes, etc.) to a display. For example, as part of a workflow, a user may use a framework to access seismic data and to render a visualization of a subsurface horizon to a display where the subsurface horizon is represented by data where each datum has an associated set of coordinate values such as an inline coordinate value, a crossline coordinate value and depth coordinate value (e.g., along a z-axis, optionally given with respect to time). In such an example, the framework may include a tool to allow for rendering of a visual juxtaposition of GIS data and seismic data, for example, where the tool may provide for communication via a "live" connection that helps to assure that the most recent GIS data is available and, for example, where an adaptive scaling GIS service may be implemented. As an example, consider a tool that can fetch GIS imagery from a remote GIS data service for a current viewable area within a rendering of a 3D project by a framework. In such an example, a surface elevation may be sampled at numerous 2D points within a 2D extent where, for example, the surface elevation samples may be converted from a time domain to a depth domain (e.g., for visualization). In the aforementioned example, the samples may be combined with 2D components and applied to a 3D mesh onto which imagery (e.g., GIS imagery) is applied as a texture (e.g., draping of imagery onto the 3D mesh). In such an example, the tool may respond to zooming and/or panning changes within a viewable extent by automatically fetching imagery from a GIS (e.g., via a network). As an example, a tool may include, for example, where an image occupies a different extent responsive to zooming and/or panning, accessing adaptive scaling operations of the GIS (e.g., optionally even while draping is occurring). As an example, finer-grained elevations may be achieved by zooming in closer to an image and sampling more 2D points in an area and, for example, imagery may be clipped to match a boundary of a surface to render imagery within an extent of a surface. As an example, a tool may provide "live" access to GIS imagery where such imagery is automatically processed and draped across a surface of a 3D project (e.g., rendered to a display by a framework). Live access may include maintaining a network connection to one or more GISs, for example, such that data may be retrieved responsive to a call with relatively little latency. In such an example, latency may be of the order of rendering data (e.g., imagery) to a display, for example, to provide a user with a real-time experience. As an example, accessing remote imagery data via a network and rendering such data may occur responsive to panning, zooming, etc.

As an example, a framework may include one or more of a search tool, an extent tool and a draping tool. Such a framework may be configured to perform worksteps, for example, consider worksteps organized in a workflow. As an example, the framework may provide for "live" access to one or more GIS services. For example, the framework may include a network connection that remains open to communication between the framework (e.g., a computing system upon which the framework executes to create a framework environment) and at least one GIS service (e.g., via an API interface). In such an example, where a credential is provided for secure access to a GIS service, the credential may be provided at the beginning of a framework session to login to the GIS service and, for example, when the framework session is terminated, the framework may be automatically logged out of the GIS service (e.g., upon closing of a project in the framework). As an example, login or other authorization for a GIS service may be performed in a manner to reduce latency for a user of a framework.

As an example, a method may include selecting a point in space (e.g., a position on Earth), retrieving information for that point from a GIS and structuring at least a portion of the retrieved information for input to a search engine.

As an example, a GIS may be a system that provides access to various types of geographical data. A GIS may provide access to data (e.g., cartographic data, etc.) and provide functionality to perform data analyses (e.g., statistical, etc.). A GIS may include one or more databases, network capabilities, etc.

As an example of a search engine, the STUDIO E&P^{™} knowledge environment (Schlumberger Ltd., Houston, TX) includes STUDIO FIND^{™} search functionality, which provides a search engine and can also provide an index(es) for content. Public content, private content or both may exist in one or more databases, which may be distributed and accessible via an intranet, the Internet or one or more other networks. As an example, an instruction module (e.g., stored in a physical storage medium) executable by one or more processors may provide for transmitting coordinates for a selected point via a network to a GIS, receiving information from the GIS responsive to the transmitting, and structuring at least a portion of the received information for submission to a search engine such as, for example, a search engine associated with the STUDIO FIND^{™} search functionality of the STUDIO E&P^{™} knowledge environment.

The STUDIO FIND^{™} search functionality provides various features for searching data. For example, features may allow a user to drill down through accessible data (e.g., granted via permission, optionally via one or more security protocols) and to find information relevant to a task at hand. As an example, the STUDIO FIND^{™} search engine may search data using one or more filters from a set or sets of filters. As an example, a set of filters may include a spatial filter for finding data based on geographic criteria. As an example, one or more GIS map services may provide a source of spatial context in the form of imagery as well as spatial data. As an example, spatial data may be in the form of shapes with attributes. As an example, a shape and its attributes may be called a geologic or geographic feature. As an example, a workflow may include accessing shapes, attributes, etc. and combining such information, for example, to improve efficiency. As an example, a system may include an option to keep a GIS service connection live and up-to-date, which may help to ensure that the most recent spatial data is available to the system (e.g., for performing a task, a workstep, a workflow, etc.).

As an example, the PETREL® seismic-to-simulation framework (Schlumberger Ltd., Houston, TX) can include and interact with a search engine and associated features such as those of the STUDIO FIND^{™} search functionality. As an example, the PETREL® framework can use spatial filters based on window area and static data (e.g., as information for filtering). As an example, a framework may include functionality for accessing dynamic data (e.g., GIS data), for example, to supplement, enhance, etc. data in a project. For example, the PETREL® framework may include a component for dynamic access to data such as GIS data where such data may become associated with a PETREL® project (e.g., the data optionally being stored with other data for the project).

As an example the STUDIO FIND^{™} functionality may include instructions for search, access, and scalability across PETREL® project(s) data. For example, a search from within a PETREL® 2D or 3D window may be executed where results from the search may enhance PETREL® project analysis by providing access to, for example, Web map services (e.g., to adjust layers for transparency and depth, etc.). As an example, a right click function may provide an ability to load from results of a search into a project (e.g., with automatic coordinate transformation) or vice-versa (e.g., to load data from a project into a search).

As an example, to allow for combined usage of a data search tool with data from a GIS service, a workflow may be created to allow a user to click a point in space and fetch information for the selected feature(s) from the GIS service, for example, using one or more predefined application programming interfaces (APIs) associated with the GIS service. As an example, a window rendered to a display may display a selected feature along with its attributes and provides an option to launch a STUDIO FIND^{™} search session using that feature as spatial criteria (e.g., optionally in conjunction with one or more other criteria). Such an approach may bridge a gap between components and, for example, allow live map service data to be used as spatial criteria in a search engine such as the STUDIO FIND^{™} search engine. As an example, a geologic or geographic feature may be dynamically used and updated on the fly (e.g., for purposes of search, analysis, etc.).

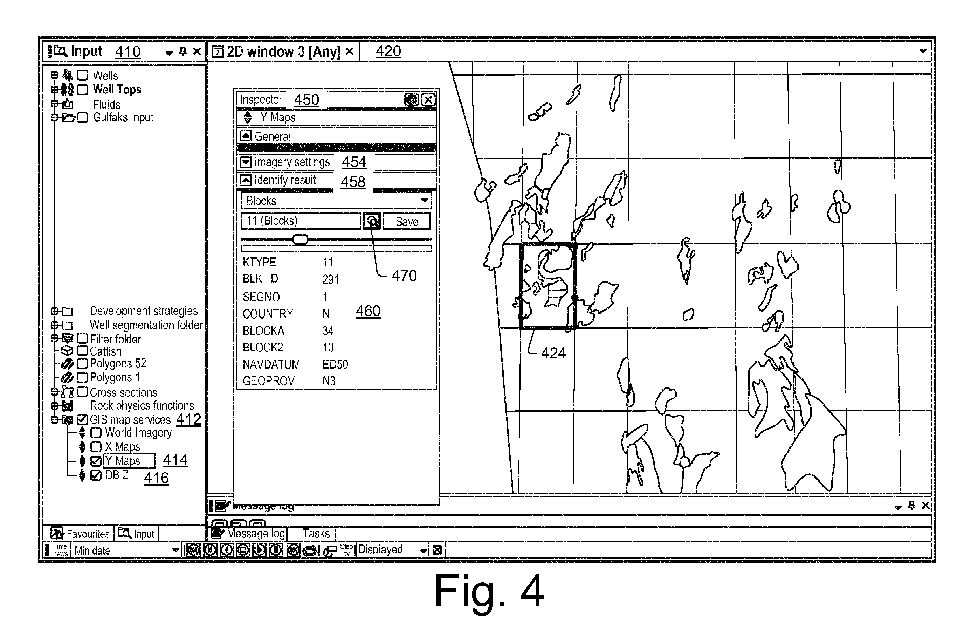

As an example, a user may, within a framework, connect to a GIS service that provides spatial data. In such an example, the GIS service may operate using an ArcGIS server service or a Web Feature Service (WFS), each of which provide means for accessing spatial data that underlies map service imagery. As an example, once the imagery is rendered to a display, a user may use a selection tool to click in space and select a feature that intersects the area around that point in space. In response, the feature shape may be loaded into memory and, for example, visibly highlighted and its attributes displayed in a window (see, e.g., the example GUI of Fig. 4). As an example, the shape may be dynamically converted from a native Coordinate Reference System (CRS) to that of a project environment for visualization (e.g., within a project framework). Such a conversion may occur via one or more conversion modules, for example, associated with a framework, a plugin to a framework, etc.

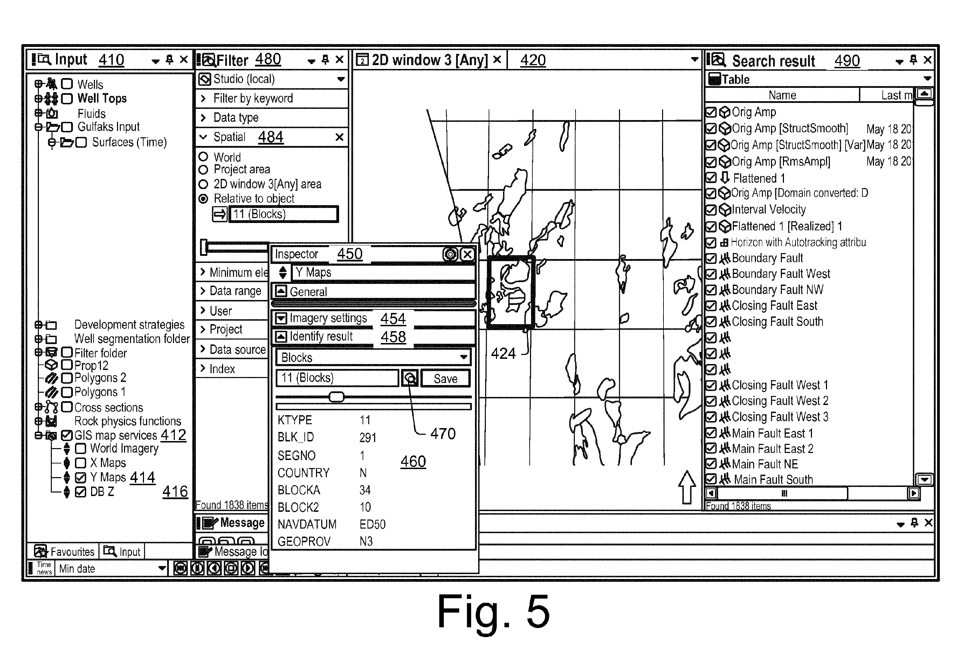

As an example, once a desired shape or set of shapes is selected, a user may enter a command (e.g., a click, a voice command, a touch, etc.) to launch a search with the geologic or geographic feature as a spatial filter or to apply the geologic or geographic feature as the spatial filter to a current search (see, e.g., the example GUI of Fig. 5). As an example, the geologic or geographic feature need not be persisted to the project first as a static shape. As an example, a geologic or geographic feature may be again dynamically converted from a native CRS to another CRS, for example, consider a CRS associated with a search engine (e.g., the STUDIO FIND^{™} search engine).

As an example, display of geospatial data in a viewing environment may be oriented, adjusted, etc., based on information pertaining to the space at which a user is currently looking. When working with 2D data such as data from a GIS service, information pertaining to a current viewer's 2D extent may assist with gathering and presentation of geospatial data. For example, GIS imagery may include at least the extent required for a rendering of a geospatial view. Knowledge of extent may help determine what imagery (e.g., image data, which may be in an image file) to fetch for a viewer at any given point in time (e.g., as a user viewing may alter viewing angle, pan, zoom, etc.). In a 2D environment, extent information may be matched, (e.g., directly or with scaling, proportionality factor, etc.) between a view and a request for imagery. In a 3D environment, however, determination of extent for imagery may be more demanding computationally (e.g., algorithmically) when compared to a 2D environment. In a 3D environment, a user's perspective may be analogous to a camera perspective, for example, where a camera is placed in a 3D scene to define a perspective. As an example, a camera may be moved throughout a scene in 3 dimensions as well as rotated in 3D space.

As an example, a "camera" graphic control may be integrated into a framework, for example, a framework such as the PETREL® seismic to simulation framework (Schlumberger Ltd., Houston, TX). A camera graphic control approach may optionally provide for presentation of information with more options than, for example, an approach that uses a single sight point (e.g., a center point at which a camera is looking) and that calculates a radius around that point, then throwing away Z values to yield values for minimum and maximum X and Y (e.g., parameters of extent for fetching imagery from a GIS).

As an example, a camera graphic control can have more position and orientation parameters than the aforementioned single point approach. As an example, a method for use with a camera graphic control can include calculating the intersection of a line originating in the space nearest a user with a flat plane representing a surface to derive a point on the Earth's surface. By repeating such a process for a set of lines (e.g., optionally evenly distributed) in the space nearest the user extending to its outer edges, a set of intersection points may be obtained. In such an example, minimum and maximum X and Y values can be extracted and a 2D extent constructed. In various trials, an extent extracted using a camera graphic control approach has proven to be more accurate than that obtained using the aforementioned single point approach.

As an example, a camera graphic control may include a planar surface with an orientation in a 3D space. In such an example, the planar surface may include a matrix or grid of points from which rays are projected, for example, in a direction perpendicular to the planar surface. As an example, a planar surface may be dimensioned to comport with one or more parameters of a viewing application. For example, a planar surface may be shaped and sized to comport with a zoom in function, a zoom out function, etc. As an example, an interface may allow for user control of a camera, for example, to allow a user to choose format (e.g., aspect ratio).

Various GISs include APIs where an API call may be made with an extent that specifies corner points of rectangle (e.g., where, in response, a GIS returns information). For such GISs, a camera may include a planar rectangle. However, other options may exist as well. For example, a camera may include a circle, oval, other type of polygon, etc. Such options may be available for user selection or available depending on type of functionality being used in a viewing application. Further, as an example, where a camera implements a circle, a radius, radii, etc., may be determined and transformed to one or more extent parameters (e.g., compatible with a GIS API specification).

As an example, a user may view a 3D scene on a 2D display via graphics projection algorithms. To calculate the space at which a user is looking, a process can include constructing lines (e.g., rays) originating from the user's perspective. As an example, rays may be constructed by projecting points on a user's screen into lines in 3D space.

In such an example, since the user's perspective may be considered to be that of a camera in the scene where the rays originate from a plane at the camera's position and orientation (e.g., the camera being at least a 2D construct orientable in a 3D space). As an example, a horizontal plane positioned to represent the Earth's surface may intersect these rays at a set of points.

In such an example, minimum and maximum X and Y values may be calculated for the set of points, and from these values, a 2D extent may be constructed. In turn, the extent may be used to fetch appropriate GIS imagery or, for example, to perform one or more 2D spatial queries against spatial data (e.g., from a GIS, a project framework associated search engine, etc.) As to a framework associated search engine that may receive extent as input, an example is the STUDIO FIND^{™} search engine (Schlumberger Ltd., Houston, TX).

As an example, a calculated extent may further be adjusted by not generating rays for the full view of the user, but limiting it to a certain central area. In such an example, as the angle of the camera approaches the horizontal, such an approach can be used to intersect rays towards the center of the camera's viewport so as to not construct an unusable extent that would cover an entire spatial environment.

In an example where a camera is in the subsurface (e.g., below an ocean or earthen subsurface of a model of a subterranean environment), rays may, instead, be intersected with a plane parallel to the Earth's surface placed near a focal point of the camera. In such an example, extent is then projected upward to the plane at the Earth's surface.

As an example, a method can include fetching imagery from a GIS map server (e.g., in appropriate means provided by the server such as via an API call). Such an image can be provided in a given spatial extent, for example, minimum and maximum X and Y values, where X and Y are defined in the context of a particular CRS that specifies map projection and datum information. As an example, when a user desires to alter or alters a view, a camera approach may determine a new extent (e.g., altered extent) and, for example, a new image may be fetched.

As an example, a GIS service may include an ArcGIS server service or a Web Feature Service (WFS), each of which provide means for accessing map service imagery. As an example, the PETREL® seismic-to-simulation framework can include and interact with a search engine and associated features such as those of the STUDIO FIND^{™} search functionality, for example, to retrieve one or more surfaces (e.g., one or more seismic surfaces). As an example, the PETREL® framework may include features for access to dynamic data such as GIS data (e.g., which may not already be in a PETREL® project itself).

As an example the STUDIO FIND^{™} functionality may include instructions for search, access, and scalability across PETREL® project(s) data. For example, a STUDIO FIND^{™} search from within a PETREL® 2D or 3D window may be executed to retrieve a seismic surface (e.g., based at least in part on an extent). As an example, the PETREL® framework may provide for access to one or more on-line (e.g., Web-based) map services. As an example, as a user or program manipulates a view of information rendered to a display, access to one or more on-line map services may occur at appropriate time intervals to allow for a visually continuous presentation of information. For example, as view is manipulated, a 2D surface oriented in a 3D space may be used for projection of rays onto a surface (e.g., 2D or 3D) in a view where an extent may be determined and transmitted to a GIS, search engine, etc., for retrieval of information that comports with the extent for rendering to a display.

As an example, GIS data may include well locations, block boundaries, and other data relevant to a workflow. As mentioned, a seismic horizon may be relevant to a workflow, for example, where the seismic horizon is in the form of a surface (a seismic horizon with a single defined z-value at each location across the horizon). Visual juxtaposition of these two types of data can provide additional insight that may be less notable if visualized separately. As an example, a system may provide an ability to keep an imagery connection live and up-to-date (e.g., to help ensure that the most recent visual data is available). As an example, a GIS adaptive scaling service may be implemented, for example, to adaptively scale data (e.g., imagery).

As an example, a method may include draping of images over surfaces as textures, or applying elevation models to imagery, for example, to provide for visualizing map imagery in the context of a seismic surface. Some examples of technologies that may provide one or more algorithms that may be implemented in performing such functions described herein (e.g., pertaining to seismic surfaces) include: Autodesk® AutoCAD® Civil 3D algorithms (marketed by Autodesk, Inc., San Rafael, CA) and MathWorks® MATLAB ® algorithms (marketed by MathWorks, Inc., Natick, MA).

As to an Autodesk® algorithm example, an image that is to be draped on a surface may be inserted into a drawing, and perhaps additionally correlated on the same coordinate system as the surface object. After an image has been mapped to a surface "object", the image will drape over the surface when viewed in a 3D isometric view using "RENDER" or "SHADE" commands.

As to a MathWorks® algorithm example, draping of an orthophoto onto a digital elevation model involves an orthophoto as an aerial photograph that has taken elevation, lens distortion, and camera angle into account so that the scale is uniform and true distances can be measured. In this example, an orthophoto can be draped onto a 3D surface rendering of the National Elevation Dataset (NED), a digital elevation model (DEM) that provides elevation data in raster format for the United States and is accessible via WMS. Using the MathWorks® Mapping Toolbox, it is possible to retrieve the NED, with customized latitude and longitude and image height and width, and render the map. A search may be performed of an installed database for layers from the Microsoft® TerraServer (marketed by Microsoft Corp, Redmond, WA), which hosts many orthophotos and topographic maps from the USGS. Once one finds an appropriate layer, the same parameters can be used to retrieve the map from the WMS server that was used to retrieve the NED. The orthophoto is then returned with appropriate latitude and longitude extents and resolution. In this example, the MathWorks® Image Processing Toolbox imshow function can be used to display the image. The orthophoto and DEM can be combined by setting the color data of the DEM plot as the aerial image. Since the WMS server can have already resized the image with limits and orientation that coincide with the DEM data, the surfaces may align and display correctly. With the MathWorks® Mapping Toolbox terrain analysis functionality, it is possible to further explore the DEM data. For example, one can calculate a viewshed, an analysis that reveals which portions of a landscape are seen by an observer from a specific vantage point. The viewshed function assigns a value of 1 to visible areas and a value of 0 to all other areas. Selection of a point in, for example, a valley can occur from which to calculate the viewshed.

As described herein, as an example, a system, method, device, etc., can provide for live map imagery to be given elevations sampled from a seismic surface. In such an example, live map service imagery can be rendered in a manner where it appears as being draped across the seismic surface.

As an example applied to a geophysical surface (e.g., a seismic surface), to achieve visual juxtaposition of a live map service imagery and the geophysical surface, an image may be fetched for a current viewable area. As an example, elevation(s) of the surface can be sampled at numerous 2D points in that fetched image's extent. If necessary, elevation(s) can be converted from the time domain to the depth domain (e.g., for visualization; noting that seismic data may be provided in a time domain, for example, as associated with seismic trace acquisition times). As an example, one or more elevations can be combined with their 2D components and applied to a 3D mesh onto which map service imagery is applied (e.g., as a texture).

As an example, given the 2D components applied to a 3D mesh onto which imagery has been applied (e.g., as a texture), a module may provide functionality that allows a user to change the viewable extent by zooming or panning, such that a new image is automatically fetched from an appropriate GIS server (e.g., and the process repeated). As the image occupies a different extent, as an example, the GIS server may perform its standard adaptive scaling operations even while draping is occurring. As an example, finer-grained elevations may be achieved by zooming in closer to an image thus sampling more 2D points in an area. As an example, the imagery may be clipped to one or more boundaries of a surface (e.g., a seismic surface) so that imagery within the extent of the surface is rendered. As an example, a system can provide for a result where the live map service imagery appears as being draped across a surface (e.g., a seismic surface).

As an example, a method can include fetching imagery from a GIS server (e.g., in appropriate means provided by the server such as via an API call). Such an image can be provided in a given spatial extent, for example, minimum and maximum X and Y values, where X and Y are defined in the context of a particular CRS that specifies map projection and datum information. To be visualized in a 3D environment, a textured mesh can be used. Such a mesh can be a geometric construction based on an image's extent. As an example, such a mesh could define corner points of an image, however, such an approach may not provide for the ability of the image to follow the elevations of the seismic surface. Thus, as an example, a grid of points can be generated in an even distribution across the image's extent. In such an example, the points can be defined as being 2D points (e.g., defined by X and Y values). As an example, an image can be applied as a texture to the mesh and inserted in a 3D visualization environment to visualize the image.

As an example, to achieve draping, elevations of a surface may be sampled at each of the grid points, as being already defined for the image. Those elevations may be in time units such as seconds or depth units such as meters. The elevations may be converted into a desired domain and then combined with the X and Y values at the point to create a 3D point. Once completed, for example, the point mesh may take on a rough approximation of the elevations of the surface.

As an example, since an image may be larger than a surface itself, clipping may be applied to result in a smaller size image. Such a process may be accomplished via use of clipping planes in a 3D environment which function to prevent the area to one side of them from being visible. As an example, four of them (e.g., clipping planes) may be created to represent each side of the rectangular surface, thus clipping the visible imagery to the extent of the surface itself.

As an example, when a user causes the visible extent to change (e.g., where a computing device receives commands, etc.), the entire process may be repeated where, for example, a new image is fetched, a mesh computed, and the surface sampled. Such a process can result in the imagery of the live map service appearing to be draped over the surface while still responding to changes in source data and visualization environment.

As an example, the PETREL® seismic-to-simulation framework (Schlumberger Ltd., Houston, TX) can include and interact with a search engine and associated features such as those of the STUDIO FIND^{™} search functionality, for example, to retrieve one or more surfaces (e.g., one or more seismic surfaces). As an example, the PETREL® framework may include features for access to dynamic data such as GIS data not already in a PETREL® project itself. Given access to one or more surfaces (e.g., seismic surfaces) and dynamic GIS data, a module may provide instructions executable by one or more processors to act upon the one or more surfaces in combination with dynamic data to provide for visualization of "draped" surfaces.

As an example the STUDIO FIND^{™} functionality may include instructions for search, access, and scalability across PETREL® project(s) data. For example, a STUDIO FIND^{™} search from within a PETREL® 2D or 3D window may be executed to retrieve a seismic surface. As an example, the PETREL® framework may provide for access to one or more on-line (e.g., Web-based) map services where information about a retrieved seismic surface may be input to assist with gathering of data from one or more map services. As an example, as a user or program manipulates a seismic surface or surfaces rendered to a display, access to one or more on-line map services may occur at appropriate time intervals to allow for a visually continuous draping of the seismic surface or surfaces. For example, a program may provide for a 360 degree rotation of a surface about a selected axis where seismic data is accessed during the rotation, imagery data access during the rotation and draping performed to drape imagery data with respect to the seismic data (e.g., to provide for rendering of an appropriately draped surface throughout the 360 degree rotation).

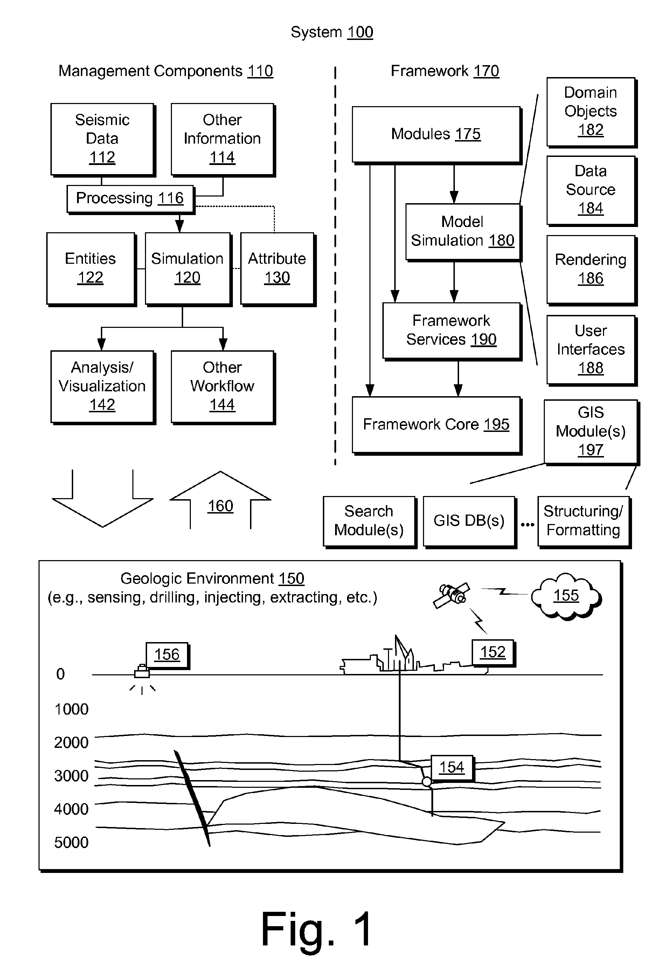

Fig. 1 shows an example of a system 100 that includes various management components 110 to manage various aspects of a geologic environment 150. For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of Fig. 1, the management components 110 include a seismic data component 112, an information component 114, a processing component 116, a simulation component 120, an attribute component 130, an analysis/visualization component 142 and a workflow component 144. In operation, seismic data and other information provided per the components 112 and 114 may be input to the simulation component 120.

In an example embodiment, the simulation component 120 may rely on entities 122. Entities 122 may include earth entities or geological objects such as wells, surfaces, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114).

In an example embodiment, the simulation component 120 may rely on a software framework such as an object-based framework. In such a framework, entities may include entities based on pre-defined classes to facilitate modeling and simulation. A commercially available example of an object-based framework is the MICROSOFT® .NET^{™} framework (marketed by Microsoft Corp., Redmond, WA), which provides a set of extensible object classes. In the .NET^{™} framework, an object class encapsulates a module of reusable code and associated data structures. Object classes can be used to instantiate object instances for use in by a program, script, etc. For example, borehole classes may define objects for representing boreholes based on well data.

In the example of Fig. 1, the simulation component 120 may process information to conform to one or more attributes specified by the attribute component 130, which may include a library of attributes. Such processing may occur prior to input to the simulation component 120. Alternatively, or in addition to, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of Fig. 1, the analysis/visualization component 142 may allow for interaction with a model or model-based results. Additionally, or alternatively, output from the simulation component 120 may be input to one or more other workflows, as indicated by a workflow component 144.

In an example embodiment, the management components 110 may include features of the PETREL® seismic to simulation software framework. The PETREL® framework provides components that allow for optimization of exploration and development operations. The PETREL® framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of simulating a geologic environment).

In an example embodiment, the management components 110 may include features for geology and geological modeling to generate high-resolution geological models of reservoir structure and stratigraphy (e.g., classification and estimation, facies modeling, well correlation, surface imaging, structural and fault analysis, well path design, data analysis, fracture modeling, workflow editing, uncertainty and optimization modeling, petrophysical modeling, etc.). Particular features may allow for performance of rapid 2D and 3D seismic interpretation, optionally for integration with geological and engineering tools (e.g., classification and estimation, well path design, seismic interpretation, seismic attribute analysis, seismic sampling, seismic volume rendering, geobody extraction, domain conversion, etc.). As to reservoir engineering, for a generated model, one or more features may allow for simulation workflow to perform streamline simulation, reduce uncertainty and assist in future well planning (e.g., uncertainty analysis and optimization workflow, well path design, advanced gridding and upscaling, history match analysis, etc.). The management components 110 may include features for drilling workflows including well path design, drilling visualization, and real-time model updates (e.g., via real-time data links).

In an example embodiment, various aspects of the management components 110 may include add-ons or plug-ins that operate according to specifications of a framework environment. For example, the framework environment marketed as the OCEAN® framework environment can allow for integration of add-ons (or plug-ins) into a PETREL® framework workflow. The OCEAN® framework environment leverages .NET® tools (Microsoft Corp., Redmond, WA). In an example embodiment, various components may be implemented as add-ons (or plug-ins) that conform to and operate according to specifications of a framework environment (e.g., according to application programming interface (API) specifications, etc.).

Fig. 1 also shows an example of a framework 170 that includes a model simulation layer 180 along with a framework services layer 190, a framework core layer 195 and a modules layer 175. The framework 170 may include the commercially available OCEAN® framework where the model simulation layer 180 is the commercially available PETREL® model-centric software package that hosts OCEAN® framework applications. In an example embodiment, the PETREL® software may be considered a data-driven application.

The model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

In the example of Fig. 1, the domain objects 182 can include entity objects, property objects and optionally other objects. Entity objects may be used to geometrically represent wells, surfaces, reservoirs, etc., while property objects may be used to provide property values as well as data versions and display parameters. For example, an entity object may represent a well where a property object provides log information as well as version information and display information (e.g., to display the well as part of a model).

In the example of Fig. 1, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of Fig. 1, one or more GIS modules 197 may be provided that allows for integration with a search engine (e.g., the STUDIO FIND^{™} search engine), one or more GIS databases, one or more structuring modules, one or more formatting modules, etc. In an example embodiment, the one or more GIS modules 197 may be part of the framework 170 and provide for "plugging-in" to one or more other modules (e.g., whether local or remote).

As an example, the one or more GIS modules 197 may receive data responsive to input from a pointing device (e.g., via a computer bus, network, wireless, etc. connection). In turn, the one or more modules 197 may communicate the data in appropriate form to a GIS (e.g., via a network, whether wired or wireless), optionally in a manner specified by one or more application programming interfaces associated with the GIS. In response, the one or more modules 197 may receive information (e.g., via a network) from the GIS (e.g., where the one or more modules 197 makes an API call and the GIS responds to the call according to a specification for the API). The one or more modules 197 may then process at least a portion of the information (e.g., structuring, formatting, etc.) for input to a search engine, optionally using one or more filters. Search results provided by the search engine may then be returned, for example, to process a workflow associated with the framework 170.

As to the nature of the information that may be received from a GIS, this may depend on particulars of the GIS (or GISs). For example, the ArcGIS provides Esri data and maps in formats such as .MXD (maps) and .LYR (layers). The ArcGIS includes an on-line service that hosts maps and tasks that can be used in ArcGIS "clients" (e.g., in a server-client architecture). The maps and tasks are generally worldwide in coverage and most are updated at least twice per year. ArcGIS task services include geocoding, routing, and geometry services.

The so-called ArcGIS Engine is a collection of embeddable GIS components and developer resources that can be used to extend the ArcGIS or build applications. For example, a developer can use the ArcGIS Engine to deploy GIS data, maps, and geoprocessing scripts in desktop or mobile applications using application programming interfaces (APIs) for .NET, Java, and C++. A REST API is available, with documentation at http://help.arcgis.com/en/arcgisserver/10.0/ apis/rest/, which is incorporated by reference herein.

As an example, a JavaScript Object Notation (JSON) response using the REST API of the ArcGIS may be as follows:

```
{"displayFieldName" : "AREANAME",
      "fieldAliases" : { "ST" : "ST", "POP2000" : "Population - 2000",
      "AREANAME" : "City Name"
      },
      "fields" : [{ "name" : "ST", "alias" : "ST", "type" : "esriFieldTypeString",
      "length" : 2},
      {
         "name" : "POP2000", "alias" : "Population - 2000", "type" :
      "esriFieldTypeInteger"},
      { "name" : "AREANAME", "alias" : "City Name", "type" :
      "esriFieldTypeString", "length" : 255}],
      "geometryType" : "esriGeometryPoint","spatialReference" : {"wkid" :
      4326},"features" : [ { "attributes" : { "ST" : "CA", "POP2000" :
      3694820, "AREANAME" : "Los Angeles" }, "geometry," : {"x" : -
      118.37, "y" : 34.086} }, { "attributes" : { "ST" : "CA", "POP2000"
      : 461522, "AREANAME" : "Long Beach" }, "geometry," : {"x": -118.15,
      "y" : 33.80} }]}
```

As an example, a geometry parameter is available in the ArcGIS server REST API, which may be specified as follows:
"geometry"
Description: The geometry to apply as the spatial filter. The structure of the geometry is the same as the structure of the JSON geometry objects returned by the ArcGIS REST API. In addition to the JSON structures, for envelopes and points, you can specify the geometry with a simpler comma-separated syntax.
Syntax:
   JSON structures:
geometryType=<geometryType>&geometry={geometry}
   Envelope simple syntax:
geometryType=esriGeometryEnvelope&geometry=<xmin>,<ymin>,<xmax>,<y max>
   Point simple syntax:
geometryType=esriGeometryPoint&geometry=<x>,<y>
Examples:
geometryType=esriGeometryEnvelope&geometry={xmin: -104, ymin: 35.6, xmax: -94.32, ymax: 41}
   geometryType=esriGeometryEnvelope&geometry=-104,35.6,-94.32,41
   geometryType=esriGeometryPoint&geometry=-104,35.6

The ArcGIS REST API geometry service resource is primarily a processing and algorithmic resource that supports operations related to geometries. The geometry service resource has the following operations:
Project - Returns an array of projected geometries.
Simplify - Returns an array of simplified geometries.
Buffer - Returns an array of polygons at the specified distances for the input geometry. An option is available to union buffer polygons at each distance. Areas and lengths - Calculates areas and perimeter lengths for each polygon specified in the input array.
Lengths - Calculates the lengths of each polyline specified in the input array.
Relation - Determines the pairs of geometries from the input geometry arrays that participate in the specified spatial relation.
Label Points - Calculates an interior point for each polygon specified in the input array.
Auto Complete - Simplifies the process of constructing polygons that are adjacent to other polygons.
Convex Hull - Returns the Convex Hull of the input geometry.
Cut - Splits the input polyline or polygon where it crosses a cutting polyline.
Densify - Densifies geometries by plotting intermediate points between existing vertices.
Difference - Constructs the set-theoretic difference between an array of geometries and another geometry.
Generalize - Returns generalized (Douglas-Poiker) versions of the input geometries.
Intersect - Constructs the set-theoretic intersection between an array of geometries and another geometry.
Offset - Constructs the offset of the given input polyline based on an offset distance.
Reshape - Reshapes a polyline or a part of a polygon using a reshaping line.
Trim / Extend - Trims / Extends each polyline specified in the input array, using the user specified guide polylines.
Union - Constructs the set-theoretic union of the input geometries.

As an example, a geometry service may be used to: Buffer, project, and simplify geometry; Calculate areas and lengths for geometry; Determine spatial relations and label points; Determine distances between geometries; Compute Union, Intersection and Difference between geometries; and Auto Complete, Generalize, Reshape, Offset, Trim/Extend and compute Convex Hull's of geometries.

As an example, by selecting a point a menu may be available for selecting a command associated with that point where the command becomes part of a message transmitted to an interface of a GIS. For example, a command may be a utility method of the ArcGIS such that information returned by the GIS includes information resulting from execution of that utility method.

As an example, a GIS service may be an image service. As an example, consider the ArcGIS image service, which provides access to published imagery. Such an image service supports two views of the published imagery: a mosaicked image view and a raster catalog view. One may, for example, use an image service to do the following:
Get image service information, including its native spatial reference, extent, pixel size, pixel type, number of bands, and band statistics;
Generate an image;
Query the raster catalog; and
Download rasters.

The REST API image service resource represents an image service published with ArcGIS Server. The resource provides basic information associated with the image service such as the service description, its name, description, extent, pixel sizes, and band counts. For example, the ArcGIS image service resource supports the following operations:
Export Image: Returns a seamless mosaicked image for the specified area.
Identify: Identifies the content of an image service.
Query: Query the image service.
Download: Downloads raw raster files.
Raster Catalog Item: Represents a single raster catalog item.
Raster File: Streams the content of a single raw raster file.

As an example, a JSON response example via the ArcGIS server REST API may be as follows:
{"serviceDescription" : "Test Image Service Description",
"name" : "wsiearth.tif",
"description" : "wsiearth.tif",
"extent" : {"xmin" : -180, "ymin" : -90, "xmax" : 180, "ymax" : 90,
"spatialReference" : {"wkid" : 4326}},
"pixelSizeX" : 30.386,
"pixelSizeY" : 30.386,
"bandCount" : 3,
"pixelType" : "U8",
"minPixelSize" : 0.0,
"maxPixelSize" : 0.0,
"copyrightText" : "ESRI",
"serviceDataType" : "esrilmageServiceDataTypeRGB",
"minValues" : [0.0, 0.0, 0.0],
"maxValues" : [255.0, 254.0, 255.0],
"meanValues" : [82.707, 107.448, 60.118],
"stdvValues" : [39.838, 37.735, 36.466]

As to an example of an "envelope", for the ArcGIS server REST API, it may include corner points of an extent and be represented by xmin, ymin, xmax, and ymax (e.g., along with a spatialReference). For example, JSON syntax and an example follow:
JSON Syntax
   {"xmin" : <xmin>, "ymin" : <ymin>, "xmax" : <xmax>, "ymax" :
   <ymax>,"spatialReference" : {<spatialReference>}}
JSON Example
   {"xmin" : -109.55, "ymin" : 25.76, "xmax" : -86.39, "ymax" :
   49.94,"spatialReference" : {"wkid" : 4326}

As an example, an ArcGIS feature service may allow clients to query and edit features, which include geometry, attributes and symbology (e.g., organized into layers and sub types within a layer). A REST API feature service resource can represent a feature service published with ArcGIS Server. Such a resource can provide basic information about the feature service including the feature layers and tables that it contains, the service description, etc.

As an example, a module may parse information from an API call to a GIS and transmit such information to a search engine. As an example, a module may transmit an API call to an ArcGIS server, receive a response to the API call that includes various information (e.g., optionally stemming from execution of a utility by the ArcGIS server), and parse the information to transmit at least a portion of it in an appropriate format to a computer executing the STUDIO FIND^{™} search functionality. For example, the response to the API call may include spatial data that may be formatted as spatial criteria for the STUIDO FIND^{™} search engine. Such an example may be implemented using a graphical user interface rendered to a display by a computing device, for example, where a user navigates a pointer to select (e.g., touch screen, voice, mouse, etc.) a point in a geographic region (e.g., a region being explored for extraction of resources).

As an example, a menu or other control graphic may be rendered to the display that allows the user to select a STUDIO FIND^{™} search option. Upon selection of that option, instructions may be executed by the computing system to formulate an API call to a GIS (e.g., with information associated with a selected point), to receive a response to the API call, and to automatically submit one or more criteria to the STUDIO FIND^{™} search engine where at least one of the one or more criteria are based at least in part on the response (e.g., information in the response) to the API call. In turn, information may be formatted and rendered to a display for viewing by a user. Such information may alternatively or additionally be directed to a routine (e.g., method, etc.) for analysis, for example, as in a workflow analysis.

In the example of Fig. 1, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc.

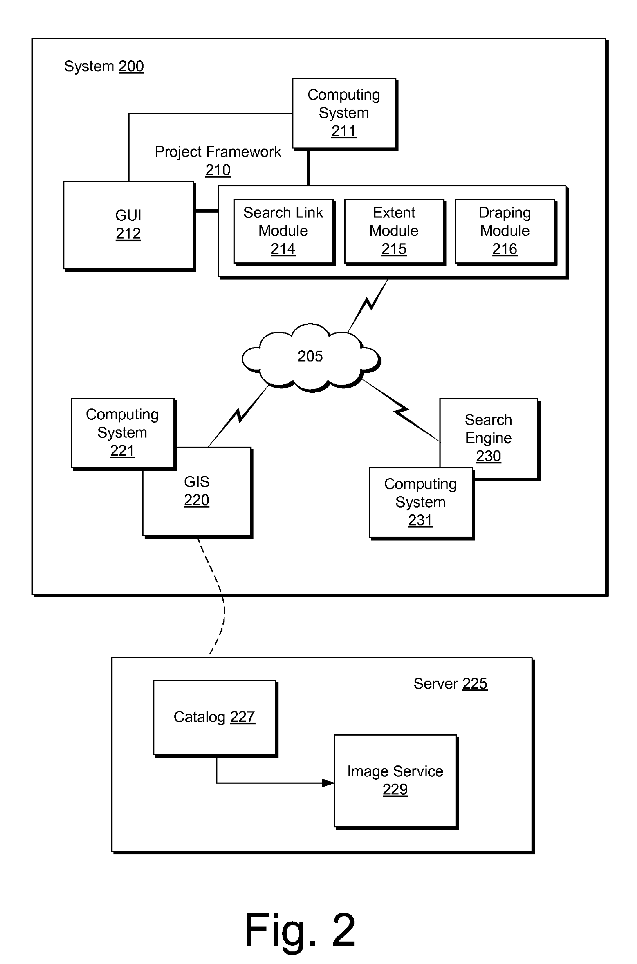

Fig. 2 shows an example of a system 200 that includes a computing system 211, a computing system 221 and a computing system 231 configured for communication via one or more networks 205. The computing system 211 provides for execution of a project framework 210 to present a GUI 212 and of one or more of a search link module 214, an extent module 215 and a draping module 216, which may be GIS-related modules (see, e.g., the one or more modules 197 of Fig. 1). Through interaction with the GUI 212, instructions and data may be transmitted by one or more of the modules 214, 215 and 216 via the network 205 to the computing system 221, which provides for execution of a GIS 220. As an example, the computing system 221 may transmit information to the computing system 211 whereby execution of the module 214 causes at least a portion of the information to be transmitted to the computing system 231, which provides for execution of a search engine 230. In turn, the computing system 231 transmits search results to the computing system 211, which may be rendered to the GUI 212.

The example of Fig. 2 also shows a server 225 as being associated with the GIS 220. The server 225 includes a catalog and an image service, for example, for export of one or more images listed in the catalog. As an example, the extent module 214 may issue requests from the computing system 211 via the network 205 to the computing system 221 for consumption by the GIS 220 where the GIS 220 causes the computing system 221 to respond by accessing one or more image files and transmitting the one or more image files via the network 205 to the computing system 211. At the computing system 211, one or more modules may act to render a view or views using the data in one or more of the one or more image files. Such a process may be dynamic in that user interaction or automatic instructions (e.g., that render information to the GUI 212) automatically cause repeated construction of an API call, issuance of the API call and receipt of one or more image files from a GIS responsive to the API call.

As an example, the search engine 230 may be the STUDIO FIND^{™} search engine, which may provide for access to an index that indexes information (e.g., content) for one or more projects associated with the project framework 210, which may be the PETREL® framework. In such a manner, a user using the project framework 210 may implement the extent module 214 to determine and transmit extent information to the search engine 230 via the network 205, which may be a local network, the Internet, etc. In turn, the search engine 230 may retrieve information structured as search results and transmit such information via the network 205 to the project framework 210, for example, via the extent module 214 or other module or functionality of the project framework 210.

As an example, at the computing system 211, one or more modules (see, e.g., the module 216) may act to drape one or more surfaces (e.g., seismic surfaces) using the data in one or more of the one or more image files. Such a process may be dynamic in that user interaction or automatic instructions (e.g., that render information to the GUI 212) automatically cause repeated construction of an API call, issuance of the API call and receipt of one or more image files from a GIS responsive to the API call. Further, given the one or more image files, a draping module may be executed by the computing system 211 (e.g., or other computing system) to automatically drape a surface and render that draped surface to the GUI 212 (e.g., or another window, etc.).

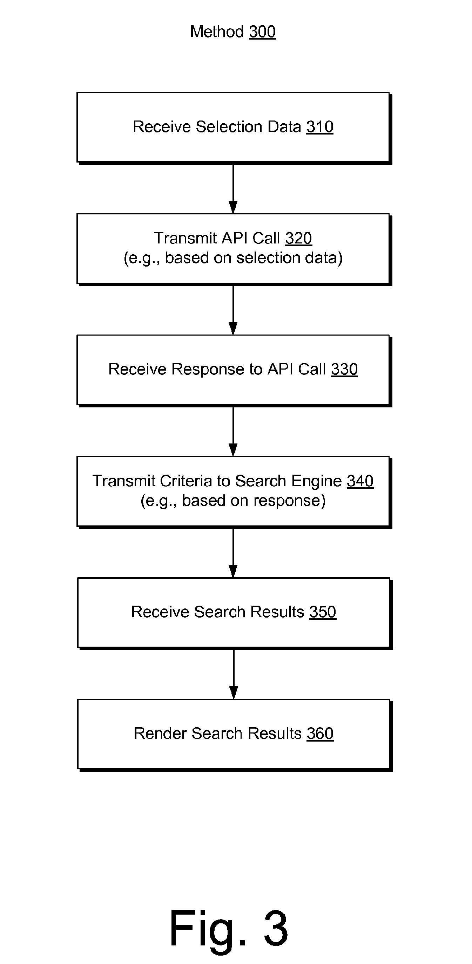

Fig. 3 shows an example of a method 300. The method 300 includes a reception block 310 for receiving selection data (see, e.g., the GUI 212 of Fig. 2), a transmission block 320 for transmitting an API call to a GIS, a reception block 330 for receiving a response to the API call, a transmission block 340 for transmitting one or more search criteria to a search engine based at least in part on the response to the API call, a reception block 350 for receiving search results corresponding at least in part to the one or more search criteria, and a render block 360 for rendering at least a portion of the information in the search results to a display.

Fig. 4 shows an example of a graphical user interface (GUI) for a project in a project framework (e.g., the PETREL® framework) that includes an input panel 410, a 2D panel 420, and a tool panel 450. In the GUI of Fig. 4, data from a GIS is rendered to the 2D panel 420. For example, imagery data may be rendered where the imagery data has associated underlying spatial data. Based on the imagery data, a user may click in a space and select a geologic or geographic feature such that an associated feature shape (e.g., per underlying spatial data) is loaded into memory. For example, consider a space 424 within the imagery data rendered to the 2D panel 420. In such an example, the space 424 and, for example, one or more shapes therein, may be visibly highlighted and attributes displayed in a corresponding window (see, e.g., the tool panel 450). A process may also convert relevant data from that of a CRS associated with a GIS to that of a coordinate system associated with a project framework.

In the example of Fig. 4, the input panel 410 includes GIS service selections 412 that include, for example, various maps, imagery, doctorate data, etc. As shown, a service referred to as "Y maps" 414 is selected along with a service referred to as "DB Z" 416, which may be a database of facts associated with a geographical region (e.g., provided by a directorate, etc.). As an example, facts may include facts from one or more databases. As an example, consider a property rights database, which may include mineral and/or other resource rights (e.g., water, oil, gas, etc.).

In the example of Fig. 4, the tool panel 450 includes various selectable items including imagery settings 454, identify results 458 settings, a data panel 460 and a search control 470 (e.g. a graphical control, button, etc.), which may be selected upon receipt of input (e.g., via navigation with a pointing device, a touch via a touch screen, a voice command, etc.). In turn, the search control 470 may commence a search session, for example, where one or more criteria are used to perform a search using a search engine. As an example, a criterion may be a search criterion, a filter criterion, etc. As shown in the example of Fig. 4, the tool panel 450 include "Y Maps", for example, as it has been selected in the input panel 410 (see "Y Maps" 414). As "DB Z" 416 has also been selected, scrolling in the tool panel 450 may reveal this selection as well (see, e.g., scroll arrows).

In the example of Fig. 4, the input panel 410 also includes selectable listings for indexed items such as entity items (e.g., wells, well tops, etc.). For example, a model of a geologic environment associated with a framework may include indexed items where such indexed items may be selectable for purposes of display, search, etc.

Fig. 5 shows an example of a graphical user interface (GUI) for a project in a project framework (e.g., the PETREL® framework). In the example of Fig. 5, after a selection process such as the selection process illustrated in Fig. 4, a GUI may provide for search options, for example, responsive to activation of the search control 470. In such an example, data associated with the geologic or geographic feature that has been selected may be used to apply one or more filters, populate one or more fields, etc., for performing a search. For example, a filter panel 480 may be rendered that includes a listing of spatial criteria 484 that may be associated with the space 424. In such an example, data associated with the space 424 (e.g., as a selected feature) may be applied as a spatial filter for performing a search using a search engine. In the example of Fig. 5, note that the filter panel 480 includes various menus that include menu items such as, for example, "filter by keyword", "data type", and "spatial". As to "spatial", this includes "world", "project area", "2D window", "relative to object" where the entry "11 (Blocks)" corresponds to the underlying GIS data "11 (Blocks)" as illustrated in the overlying "Inspector" tool panel 450. Further, note that the tool panel 450 also includes a save button, for example, to save a search (e.g., one or more search criteria), to save search results, etc. Such control buttons may be provided to issue control commands, instructions, etc., to a project framework. In such a manner, per the examples of Figs. 4 and 5, the GIS imagery and underlying data may be integrated into a project framework together with search functionality associated with the project framework (e.g., to search a project database). As shown in Fig. 5, a results panel 490 labeled "search results" displays a listing of search results, including various "objects" such as fault objects (e.g., which may be instantiated by selection, clicking, etc.). Accordingly, data from a GIS is used to perform a search and return search results within a project framework.

As an example, a module can provide for structuring a search GUI based at least in part on information retrieved or available from a GIS. For example, in Fig. 5, the search field GUI shows a control button labeled "relative to object" where selection of the control button allows a user to select information retrieved (e.g., or available) from a GIS (e.g., as in the GIS window, labeled "Inspector"). As an example, a module may provide for rendering of such search controls responsive to implementation of an interface such as the "Inspector" interface or functionality underlying that interface. For example, once a user selects an option that allows for GIS data facilitated search, instructions may be executed that automatically provide for rendering additional graphic control options in a search control window such as the window labeled "Search filter", which, again, may be associated with the STUDIO FIND^{™} search functionality. In such a manner, a user may not be burdened with the display of additional potential search options where the GIS data functionality is not implemented. Further, as an example, a module may provide a "hint" graphic that notifies a user when such GIS data functionality is available, for example, to assist that user in performing a search (e.g., a hint message: "GIS data assist available, click here"). Thus, the GIS data functionality may be activatable via a control within the search functionality of, for example, the STUDIO FIND^{™} search technology. Such an approach can provide for access to the GIS data functionality at the time of search (e.g., a user does not have to commence with the GIS data functionality prior to accessing search functionality associated with a project framework).

As an example, one or more computer-readable storage media can include computer-executable instructions to instruct a computing system to: transmit an API call from a project framework to a geographic information system (GIS); receive a response, to the API call, from the GIS where the response includes data from the GIS; and structure at least a portion of the data from the GIS as one or more search criteria for a search engine associated with the project framework. In such an example, the data from the GIS can include spatial data. As an example, instructions may instruct a computing system to receive selection data responsive to selection of a point via a graphical user interface associated with a project framework; and construct an API call based at least in part on the selection data.

As an example, a system can include a plugin module for a project framework for linking the project framework to a geographic information system and for structuring data from the geographic information system as one or more search criteria for a search engine associated with the project framework. In such an example, the plugin module can include one or more computer-readable storage media that include computer-executable instructions to instruct a computing system to perform the linking and the structuring. In such an example, a plugin module may provide for linking the project framework and the search engine. As an example, a plugin module may be stored in memory of a computing device and operable in a project framework executing on the computing device.

As an example, a method can include receiving selection data; transmitting an API call to a geographic information system (GIS); receiving a response to the API call from the GIS; transmitting one or more search criteria to a search engine based at least in part on the response to the API call; and receiving search results corresponding at least in part to the one or more search criteria. Such an example may further include rendering at least a portion of the information in the search results to a display (e.g., using appropriate rendering hardware, optionally including a graphics processing unit and optionally using DIRECTX® (marketed by Microsoft Corp., Redmond, WA) or other functionality).

As an example, a method can include rendering GIS imagery (e.g., imagery data) to a display and making a selection with respect to the rendered GIS imagery and, for example, receiving selection data responsive to making the selection with respect to the rendered GIS imagery. Such selection data may be available locally or remotely and may optionally be used, at least in part, for accessing additional information from a GIS.

As an example, a method can include receiving selection data where the selection data includes coordinates associated with a three-dimensional model. In such an example, the three-dimensional model may include a model of a reservoir. As an example, a three-dimensional model may include surfaces where the surfaces include an uppermost surface that corresponds to a surface of the Earth. In such an example, a method may include receiving selection data where the selection data includes coordinates associated with the uppermost surface. As an example, a method may include receiving selection data in part by generating a two-dimensional extent from a three-dimensional surface.

As an example, a method may include establishing a network communication link with a GIS prior to receiving selection data and, for example, maintaining the network communication link and transmitting a plurality of API calls to the GIS (e.g., where each API call includes different selection data).

As an example, a method may include loading a plugin module into memory of a computing device where the plugin module is operable in a project framework executing on the computing device for linking the project framework to the GIS and for structuring data from the GIS as one or more search criteria for a search engine associated with the project framework.

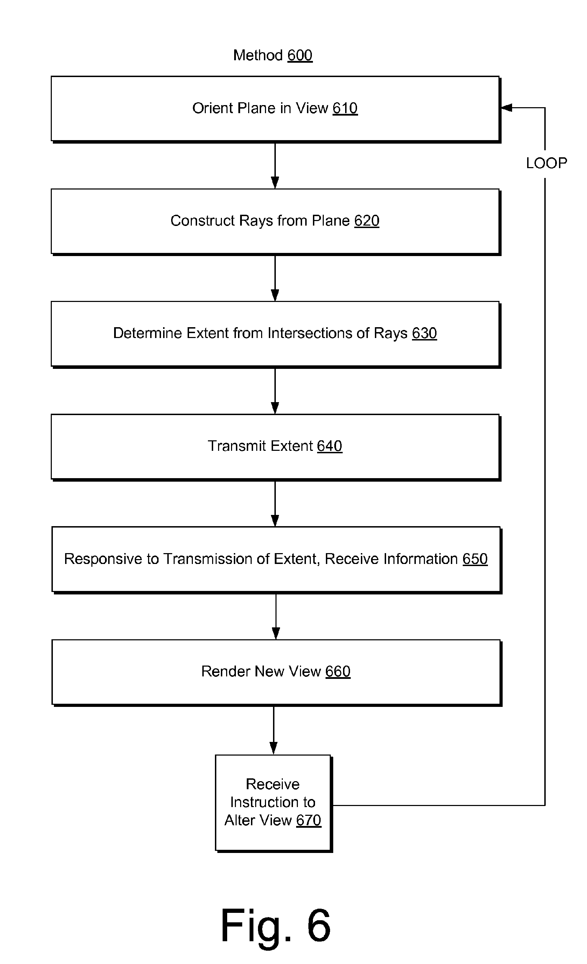

Fig. 6 shows an example of a method 600. The method 600 includes an orientation block 610 for orienting a plane in a view (e.g., a view rendered using functionality associated with a project framework), a construction block 620 for constructing rays from the plane (e.g., to a surface or object in the view), a determination block 630 for determining extent based at least in part on intersections of the rays, a transmission block 640 for transmitting the determined extent, a reception block 650 for receiving information, responsive to the transmitting, a render block 660 for rendering a new view based at least in part on the received information, a reception block 670 for receiving an instruction to alter the view rendered (e.g., to a display) where the receipt of the instruction act to return the method 600 to the orientation block 610.

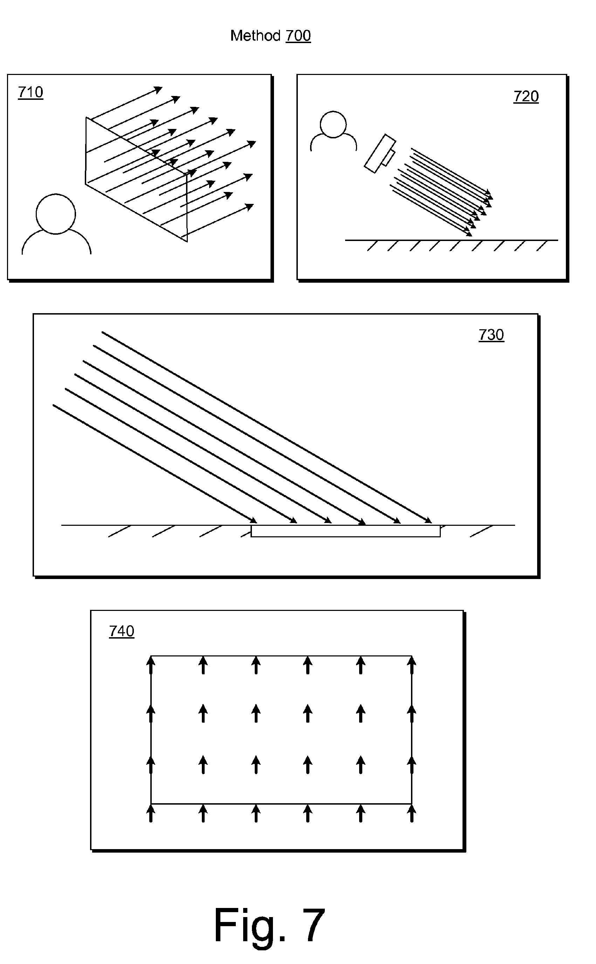

Fig. 7 shows an example of a method 700. In block 710, a user's orientation may be represented as a planar surface in space. In block 720, the planar surface may be associated with a camera graphic control. In block 730, rays may be projected (e.g., constructed) from the camera graphic control to a surface within a view rendered to a display (e.g., by functionality of a project framework). In block 740, points can be identified as intersection points for the constructed rays of the surface within the view. In the example of Fig. 7, the points form a grid shaped as a rectangle where corners of the rectangle may be determined (e.g., or estimated). The corners may be parameters of an extent, which may be transmitted in part or in whole (e.g., optionally with transform, scaling, etc.) to a GIS, a search engine, etc. In turn, the GIS, search engine, etc., may return information. Such information may be any of a variety of information. As an example, such information may be village, town, city information, road information, well information, subterranean information, etc. While various examples herein mention imagery, information fetched via such a process may be other than imagery. For example, GIS and other databases can include various types of information that may be retrieved based at least in part on one or more extent parameters, optionally in conjunction with one or more other types of parameters (e.g., search filters, search fields, etc.).

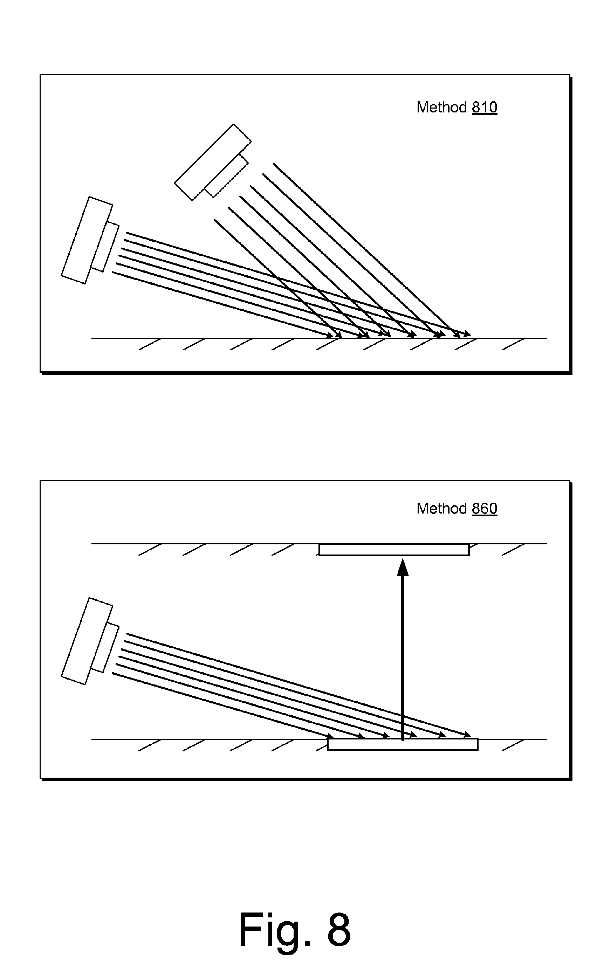

Fig. 8 shows an example of a method 810 and an example of a method 860. The method 810 involves moving a camera graphic control to a small angle with respect to a surface in a view. As mentioned, as angle of a camera graphic control approaches horizontal, intersections of rays towards a center of the camera's viewport may be considered so as to not construct an unusable extent that would cover the entire spatial environment. As to the method 860, as mentioned, where a view is a subsurface view (e.g., a camera graphic control is in the subsurface), rays can be intersected with a plane (e.g., parallel to the Earth's surface) positioned near a focal point of the camera graphic control and an extent may be determined based on a projection upward to another surface (e.g., a plane at an earth surface).

As an example, a camera may be a programming construct, for example, a plane defined by code for purposes of performing one or more actions associated with the methods 700, 810 or 860. For example, a user may merely navigate a rendered view using a pointing device, touch via a touch screen, etc. where a point-of-view is determined and used in one or more of the method 700, 810 and 860 to define a plane or other geometry, for example, to determine an extent.

As an example, a subsurface may be a horizon surface (e.g., where geologic events form an interface). In such an example, a user may wish to view the horizon surface from below or above. A camera graphic control may be oriented in a view (e.g., using an extent module implemented in a project framework) that projects (e.g., constructs) rays from the camera graphic control to the horizon surface. Depending on the nature of information desired, an extent may be determined directly from the horizon surface or a projection may occur from ray intersection points on the horizon surface to a surface of the Earth. As to the latter, as GIS include Earth surface information (e.g., surface maps, satellite imagery, etc.), the extent at the Earth's surface may allow for search and retrieval of such information or optionally direct retrieval of such information. As to the former, where a database includes subsurface information (e.g., at some depth below a sea surface, land surface, etc.), the extent at the depth may be relevant for retrieval of such information (e.g., the extent determined at the depth of the intersection points may be used for search, retrieval, etc.).

As an example, one or more computer-readable storage media can include computer-executable instructions to instruct a computing system to: orient a plane in a three-dimensional view rendered to a display; construct rays from the plane to a surface in the three-dimensional view; determine a two-dimensional extent based at least in part on intersection points of the rays and the surface in the three-dimensional view; transmit the two-dimensional extent as an application programming interface (API) call; and responsive to transmission of the API call, receive information based at least in part on the two-dimensional extent. As an example, one or more computer-readable storage media can include instructions to render a new view to the display based at least in part on received information. As an example, instructions can include instructions to receive an instruction to alter a new view rendered to a display and responsive to the instruction, re-orient a plane in the new view.

As an example, information can include GIS image data. As an example, instructions can include instructions to transmit an extent as part of an API call that conforms to an API specification of a GIS, to transmit the extent as part of a search filter or search field, etc. As an example, instructions may include instructions to render a three-dimensional view of data from a 3D model of a geologic environment, for example, where the surface is a subsurface (e.g., below the Earth's surface).

As an example, a system can include a plugin module for a project framework for determining a two-dimensional extent based on manipulation of a view of a visualization of at least a portion of a three-dimensional model associated with the project framework where manipulation of the view defines an orientable planar surface in a three-dimensional space. In such an example, the plugin module may be in the form of one or more computer-readable storage media that include computer-executable instructions to instruct a computing system to perform at least the determining. For example, plugin module may be stored in memory of a computing device and be operable in a project framework executing on the computing device.

As an example, a method can include orienting a plane in a three-dimensional view rendered to a display; constructing rays from the plane to a surface in the three-dimensional view; determining a two-dimensional extent based at least in part on intersection points of the rays and the surface in the three-dimensional view; transmitting the two-dimensional extent as an application programming interface (API) call; and responsive to transmitting the API call, receiving information based at least in part on the two-dimensional extent. Such an example may further include rendering a new view to the display based at least in part on the received information. As an example, a method can include receiving an instruction to alter a new view rendered to a display and responsive to the instruction, re-orienting a plane in the new view. As an example, information received may include GIS image data.

As an example, a method can include transmitting an extent (e.g., one or more extent parameters) as part of an API call that conforms to an API specification of a GIS, as part of a search filter or field, etc. As an example, orienting a plane in a three-dimensional view rendered to a display may orient the plane with respect to a three-dimensional view of three-dimensional model data for a geologic environment.

As an example, a method can include establishing a network communication link with a GIS prior to transmitting an API call based at least in part on a first two-dimensional extent, maintaining the network communication link and transmitting another API call to the GIS based at least in part on a second, different two-dimensional extent.

As an example, a method can include loading a plugin module into memory of a computing device where the plugin module is operable in a project framework executing on the computing device for determining a two-dimensional extent based on manipulation of a view of a visualization of at least a portion of a three-dimensional model associated with the project framework where the manipulation of the view defines a plane (e.g., in a three-dimensional space).

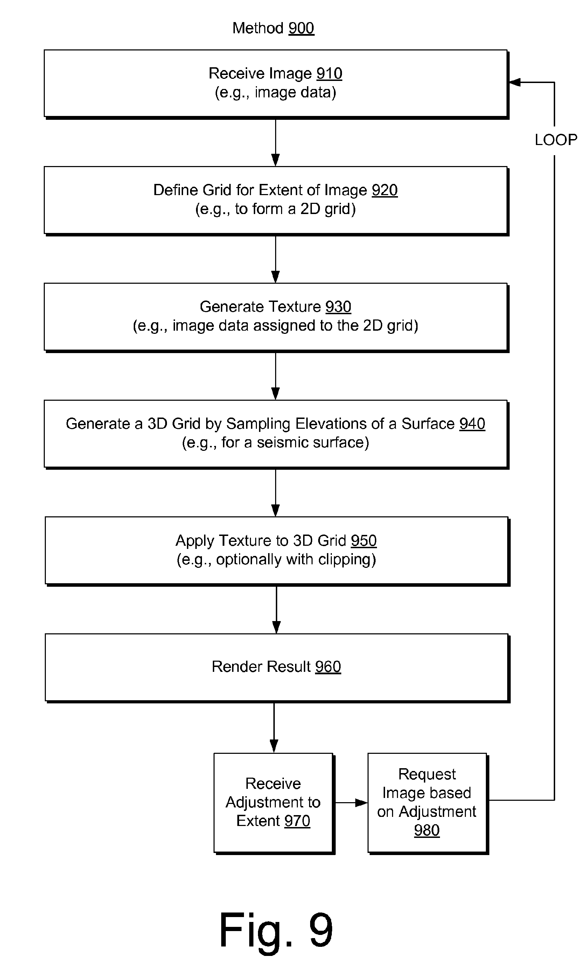

Fig. 9 shows an example of a method 900. The method 900 includes a reception block 910 for receiving an image (e.g., image data from a GIS), a definition block 920 for defining a grid for the image (e.g., to form a 2D grid or mesh), a generation block 930 for generating texture by assigning the image data to the grid, a generation block 940 for generating a 3D grid by sampling elevations of a surface (e.g., a seismic surface), an application block 950 for applying the texture to the 3D grid (e.g., optionally with clipping), a render block 960 for rendering a resulting visualization of the 3D grid with the texture (e.g., 3D grid draped with the image), a reception block 970 for receiving an adjustment to the extent of the visualization (e.g., the image draped on the 3D grid), and a request block 980 for requesting an image based on the adjustment to the extent where the request returns the method 900 to the reception block 910.

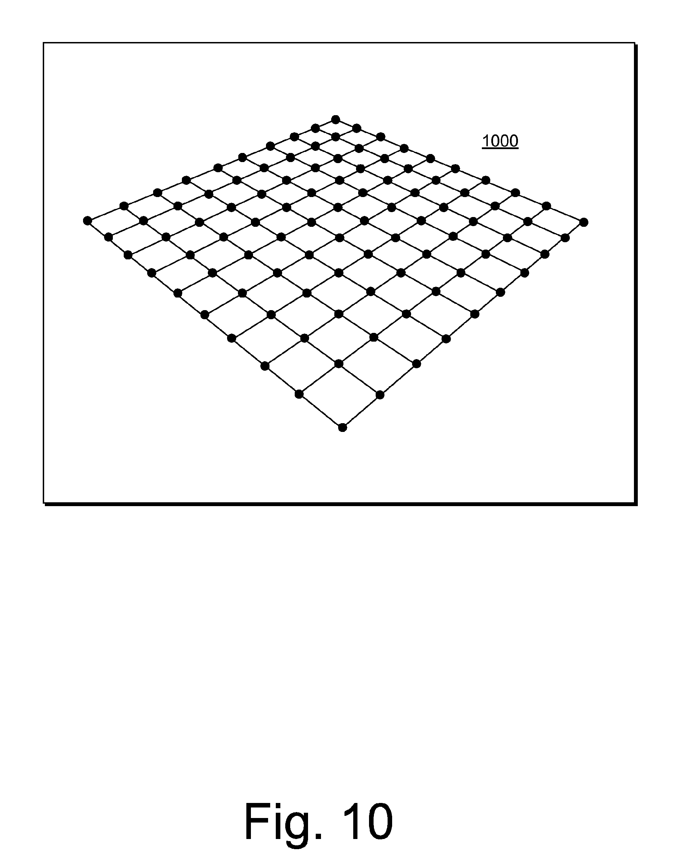

Fig. 10 shows an example of a 2D grid 1000 (e.g., a 2D mesh) for an image (e.g., for an extent of an image). As an example, the 2D grid may be based on an extent of an image or a portion thereof.

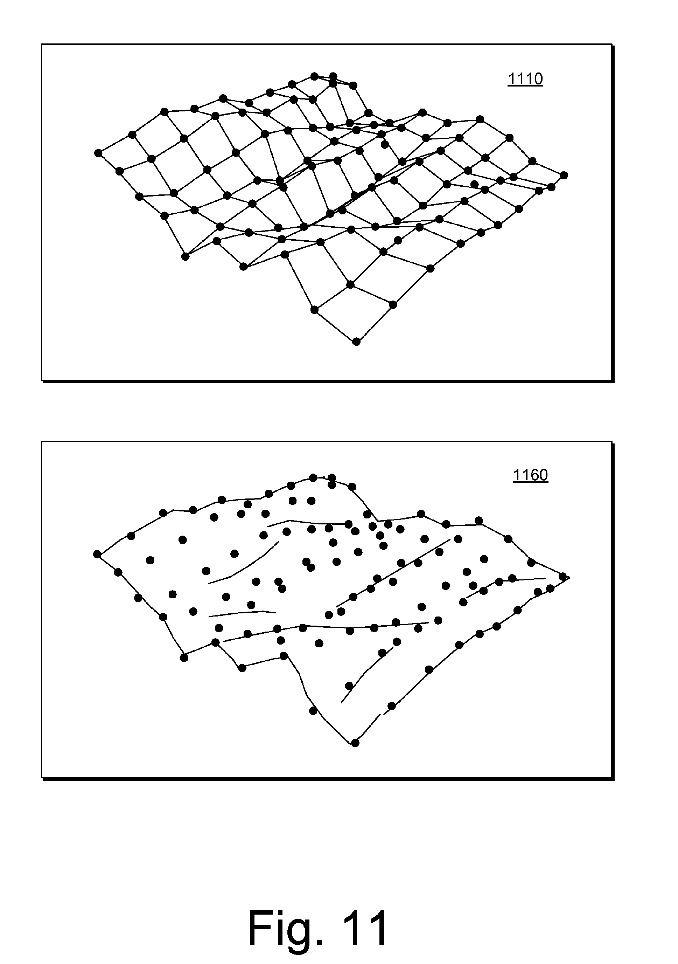

Fig. 11 shows an example of a 3D grid 1110 (e.g., a 3D mesh) based on sampling of elevations of a surface and assigning the elevations to the points of the 2D grid and an example of the 3D grid having an image draped thereon 1160 (e.g., as a texture applied to the 3D grid).

As an example, a texture may be an image stored as an image file in an appropriate file format (e.g., BMP, JPEG, TGA, TIFF, etc.). A texture may be set on to a 3D geometry (e.g., 3D object) where the texture is associated to the 3D geometry using texture coordinates, which may be supplied by the 3D geometry (e.g., via a grid, mesh, etc.).

Texture memory can refer to memory on a graphics card that is used to store 3D textures (such as imagery or facades). Texture mapping handles imagery in hardware. As an example, images, such as those from satellites, orthophotos, scanned maps, and raster-based symbols, can be rendered in near real-time when texture mapping is supported in hardware on the graphics card. Texture memory controls the total amount of imagery that can be used at one time. For imagery or raster-based symbols in a 3D GIS application, a system may include a graphics card that supports texture mapping. For example, a card may include 16 MB of RAM or more dedicated to the task.

As an example, the 3D Analyst (e.g., ArcScene) of the ArcGIS provides for draping an image over a terrain surface. ArcScene, a 3D visualization application, provides for draping a layer- containing a grid, image, or 2D features-over a surface (a grid or TIN, which is a triangular irregular network) by assigning the base heights of the layer from the surface. A GUI as to "layer properties" provides for selection of a file that includes heights. Further, a basic unit conversion is available as well as an offset (or expression). As an example, a system may include one or more features of the ArcScene 3D visualization application. For example, a GIS image and a grid or TIN associated with a seismic surface may be provided to such an application and resulting draped image data returned. As mentioned, a system may include one or more GUI for user interaction where user interaction that alters an extent initiates an update, optionally by requesting one or more additional GIS image files that provide image data that corresponds to the altered extent.

A method can include receiving image data, for a specified two-dimensional extent, from a geographic information system; defining a two-dimensional grid for the specified two-dimensional extent; generating a texture by assigning the image data to the two-dimensional grid; generating a three-dimensional grid by sampling elevations of a seismic surface and assigning the sampled elevations to the two-dimensional grid; applying the texture to the three-dimensional grid; and rendering the three-dimensional grid with the applied texture to a display.

As an example, one or more computer-readable storage media can include computer-executable instructions to instruct a computing system to: receive image data, for a specified two-dimensional extent, from a geographic information system; define a two-dimensional grid for the specified two-dimensional extent; generate a texture by assigning the image data to the two-dimensional grid; generate a three-dimensional grid by sampling elevations of a seismic surface and assigning the sampled elevations to the two-dimensional grid; apply the texture to the three-dimensional grid; and render the three-dimensional grid with the applied texture to a display. In such an example, instructions may further include instructions to receive an adjustment to the specified two-dimensional extent and to request additional image data based at least in part on the adjustment to the specified two-dimensional extent. As an example, the image data may be GIS image data. As an example, instructions may include instructions to construct an API call based in part on receipt of an adjustment to a specified two-dimensional extent where the API call conforms to an API specification of a GIS.

As an example, a system can include a plugin module for a project framework for linking the project framework to a geographic information system and for draping image data from the geographic information system on to a seismic surface of a project associated with the project framework. In such a system, the plugin module can include one or more computer-readable storage media that includes computer-executable instructions to instruct a computing system to perform the linking and the draping. As an example, a plugin module may be stored in memory of a computing device and operable in a project framework executing on the computing device.

As an example, a method may include establishing a network communication link with a GIS prior to receiving GIS image data responsive to an API call via the network communication link, maintaining the network communication link, and receiving additional GIS image data for a different API call via the network communication link.

As an example, a method can include rendering received image data in a two-dimensional planar view as well as rendering a view of a three-dimensional grid with applied texture where the applied texture is derived from the received image data. In such an example, the views may be rendered to the same display or different displays.

As an example, a method may include, responsive to zooming, rendering a zoomed view of a three-dimensional grid with applied texture and, for example, determining a two-dimensional extent for the zoomed view and receiving image data based at least in part on the two-dimensional extent for the zoomed view. In such an example, the received image data based at least in part on the two-dimensional extent for the zoomed view may be at a higher resolution than the previously received image data. For example, upon zooming, more detail may be revealed by calling for and retrieving higher resolution imagery.

As an example, a method may include, responsive to panning, determining a two-dimensional extent for a panned view and receiving additional image data based at least in part on the two-dimensional extent for the panned view.

As an example, a method may include loading a plugin module into memory of a computing device where the plugin module is operable in a project framework executing on the computing device for linking the project framework to a geographic information system and for applying image data from the geographic information system as a texture on to a seismic surface of a project associated with the project framework.

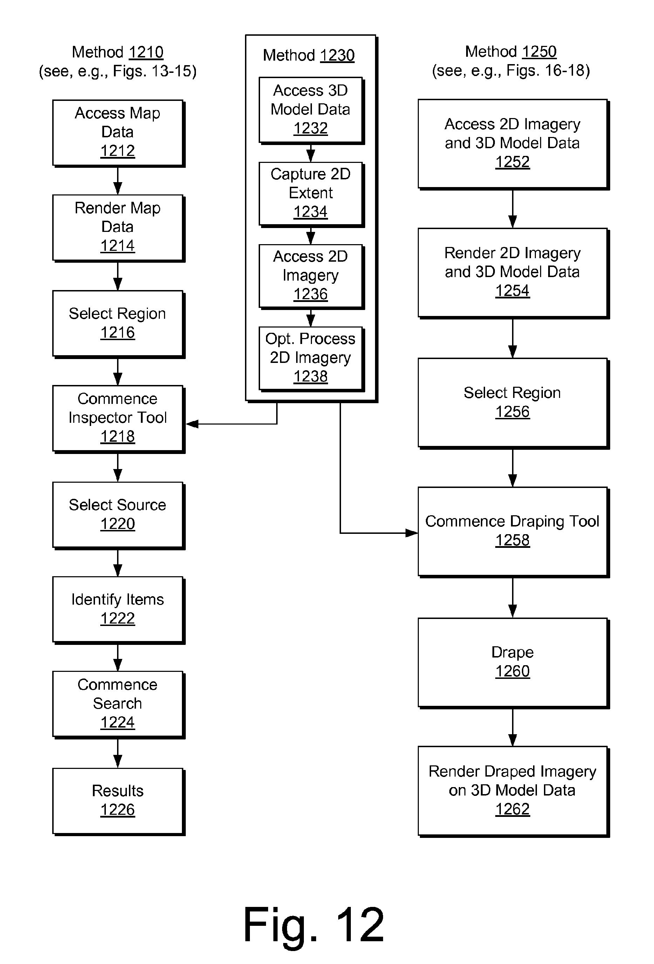

Fig. 12 shows some example methods 1210, 1230 and 1250, which may be, for example, workflows that include worksteps. The method 1210 includes an access block 1212 for accessing map data, a render block 1214 for rendering map data, a selection block 1216 for selecting a region in a rendered map, a commencement block 1218 for commencing an inspector tool (e.g., a search tool), a selection block 1220 for selecting one or more data sources such as a database or collection of databases, an identification block 1222 for identifying items (e.g., one or more search criteria, optionally including one or more filters), a commencement block 1224 for commencing a search and a results block 1226 for returning results responsive to the search and, for example, rendering results visually, storing the results to a file, transmitting the results, etc.

In Fig. 12, the method 1230 includes an access block 1232 for accessing 3D model data, a capture block 1234 for capturing a 2D extent associated with the 3D model, an access block 1236 for accessing 2D imagery based at least in part on the 2D extent and an optional process block 1238 for processing the 2D imagery (e.g., image enhancement, filtering, etc.). As shown, the method 1230 may be used in conjunction with one or more actions (e.g., blocks) of the methods 1210 and 1250. For example, the method 1230 may continue to the commencement block 1218 of the method 1210 where a search may be performed after commencing the inspector tool (e.g., a search tool).

In Fig. 12, the method 1250 includes an access block 1252 for accessing 2D imagery and 3D model data, a render block 1254 for rendering 2D imagery and 3D model data, a selection block 1256 for selecting a region, a commencement block 1258 for commencing a draping tool, a drape block 1260 for draping at least a portion of the 2D imagery (e.g., optionally processed) with respect to at least a portion of the 3D model data and a render block 1262 for rendering the draped imagery on the 3D model data (e.g., the at least a portion thereof as draped per the drape block 1260). As indicated in Fig. 12, the method 1230 may be implemented and, for example, continue to one or more of the blocks of the method 1250. For example, after accessing 2D imagery per determination of a 2D extent associated with a 3D model, a draping process may be commenced, for example, per the commencement block 1258.

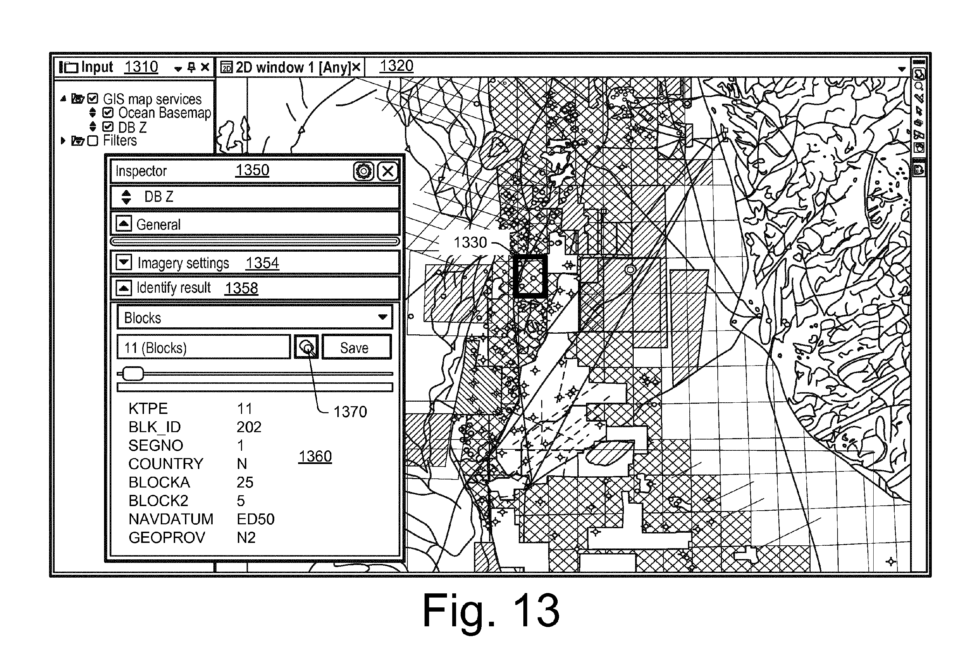

Fig. 13 shows an example of a method with respect to a graphical user interface (GUI) that includes an input panel 1310, a 2D panel or window 1320 and a tool panel 1350 for a search tool (e.g., "inspector" tool). As shown in the example of Fig. 13, input is received via the input panel 1310, for example, by selection of one or more GIS service options (see, e.g., "Ocean Basemap" and "DB Z"). A selection may be made for a region of data rendered in the 2D panel 1320, for example, as represented by the block 1330. As shown, the tool panel 1350 may include options for imagery settings 1354, identification of results settings 1358, display of data in a results display region 1360 and for initiating a search via a search control graphic 1370.

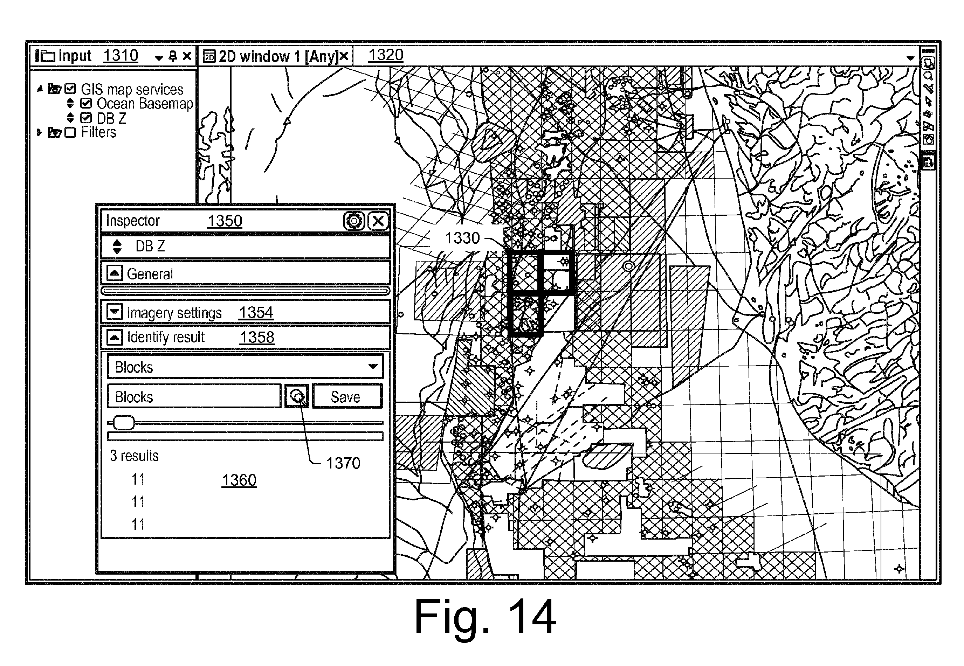

Fig. 14 shows an example of a method with respect to a graphical user interface (GUI) that may continue from the method of Fig. 13, for example, where a search initiated via the search control graphic 1370 returns results that are displayed in the results display region 1360, which may also be highlighted graphically with respect to the data displayed in the 2D panel 1320 (see, e.g., region expanded to three boxes, which represent the "3 results").

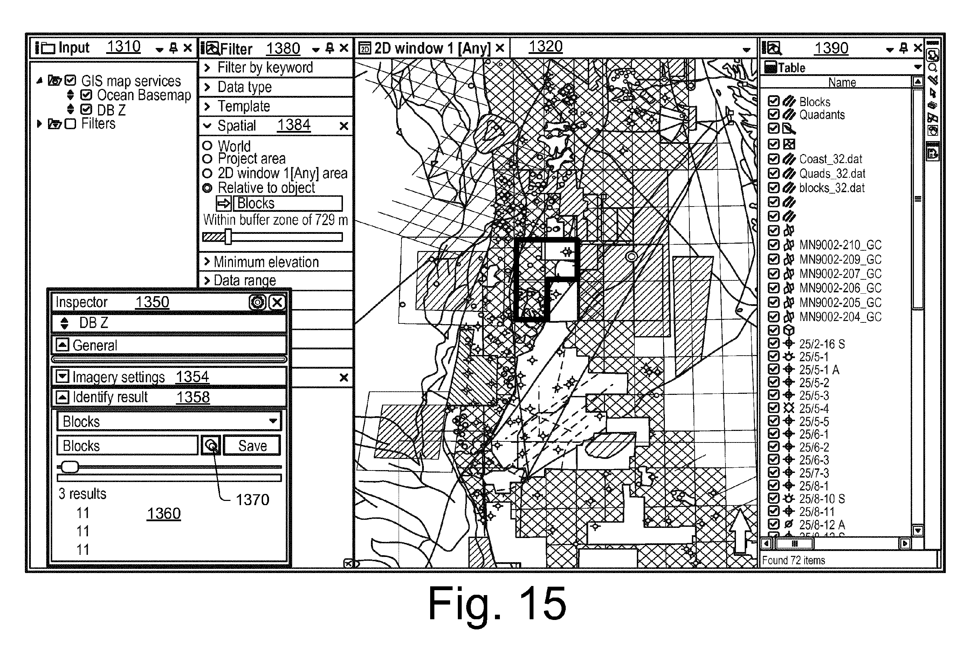

Fig. 15 shows an example of a method with respect to a graphical user interface (GUI) that may continue from the method of Fig. 14, for example, where a filter panel 1380 is rendered that includes various graphical controls for selection of filter criteria associated with the search functionality of the search tool (see, e.g., the search tool panel 1350). In the example of Fig. 15, the method can include selecting a spatial filtering option 1384 such as "relative to object" and a number of blocks within a zone having a dimension or dimensions. Such filtering may be applied, for example, during a search or, for example, after a search by filtering previously obtained search results. In the example of Fig. 15, a results panel 1390 shows in a table format various results (e.g., "Found 72 items") resulting from application of the filtering criteria. Items from a search or filtered search results may include, for example, indexed items associated with a model, items from a property rights database, items from a geologic database, etc.

As an example, results from a search may be analyzed to determine one or more locations for equipment. For example, where a pad is to be built for drilling one or more wells, results may be analyzed to determine an optimal pad location or, for example, a listing of suitable pad locations (e.g., based on one or more economic or other criteria). In such an example, the pad locations may be combined with 2D imagery and, for example, draped with respect to 3D model data. Such an approach may allow a user to assess distances in 3D as to a pad location and, for example, one or more planned wells to be drilled from that pad location.

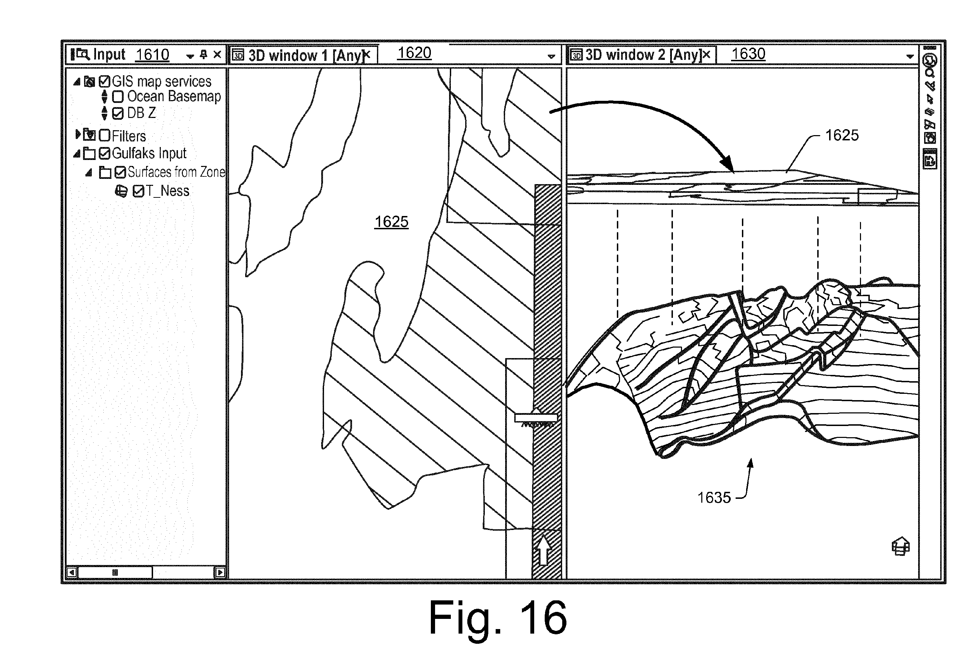

Fig. 16 shows an example of a method with respect to a graphical user interface (GUI) that includes an input panel 1610, a first 3D panel or window 1620 and a second 3D panel or window 1630 (e.g., for rendering a 3D perspective view of data). As shown in the example of Fig. 16, the method may include selecting one or more items in the input panel 1610 such as a GIS service (e.g., DB Z, a database) and model data (e.g., "Gulfaks input"). In such an example, data from the GIS service may be rendered in the first 3D panel 1620 as a visualization 1625 and model data rendered in the second 3D panel 1630 as a visualization 1635, optionally where the visualization 1625 is represented as a plane in the second 3D panel 1630 (e.g., at a surface elevation).

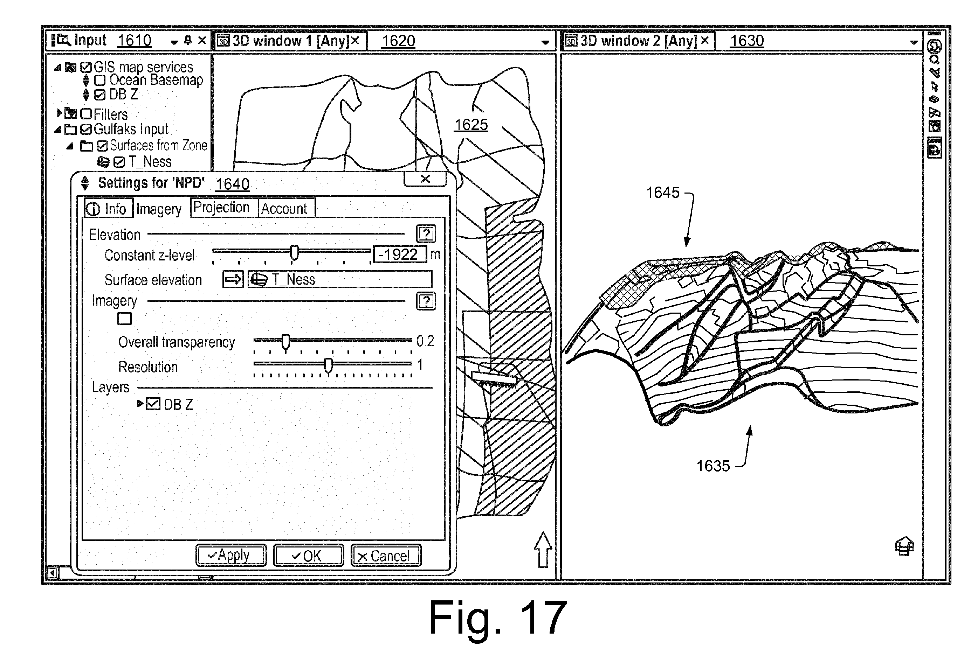

Fig. 17 shows a method that may further act upon the method of Fig. 16. As shown in Fig. 17, the method includes commencing a draping process by invoking a draping tool that renders a tool panel 1640 that includes options for draping 2D imagery with respect to 3D model data. As shown, the tool panel 1640 includes various tabs where, under an imagery tab, options are provided for elevation, imagery transparency and resolution and for layer(s), for example, noting that the imagery is associated with a database or databases (e.g., "DB Z"). As shown in Fig. 17, at least a portion of the 2D imagery visualization 1625 is draped as visualization 1645 with respect to the visualization 1635 of the 3D model data in the second 3D panel 1630.

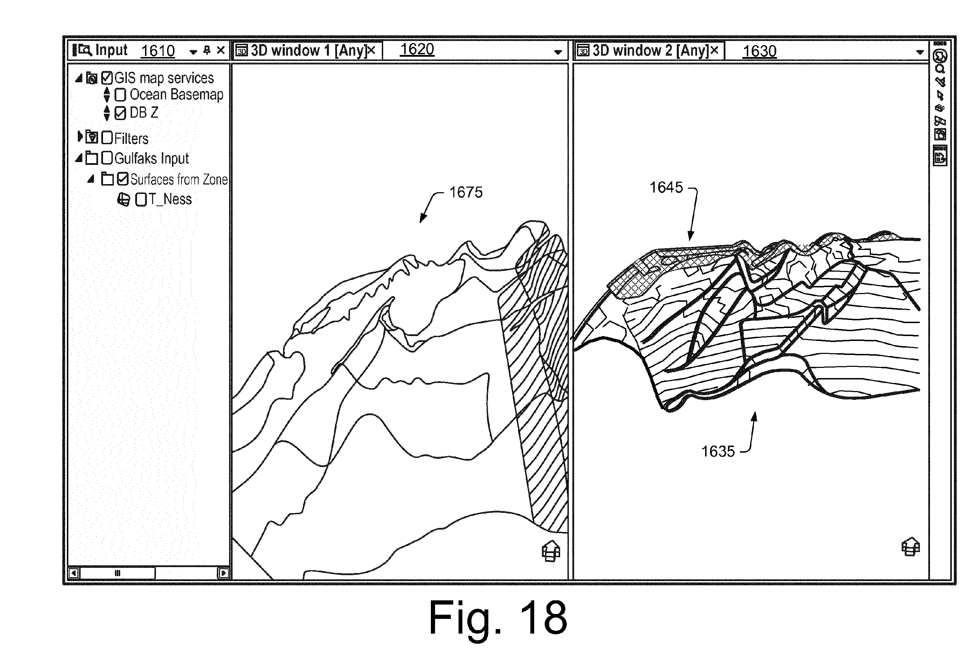

Fig. 18 shows a method that may further act upon the method of Fig. 17. As shown in Fig. 18, a draped rendering of at least a portion of the 2D imagery is shown as a visualization 1675 in the first 3D panel 1675.

In an example embodiment, one or more computer-readable media may include computer-executable instructions to instruct a computing system to output information for controlling a process. For example, such instructions may provide for output to sensing process, an injection process, drilling process, an extraction process, etc.

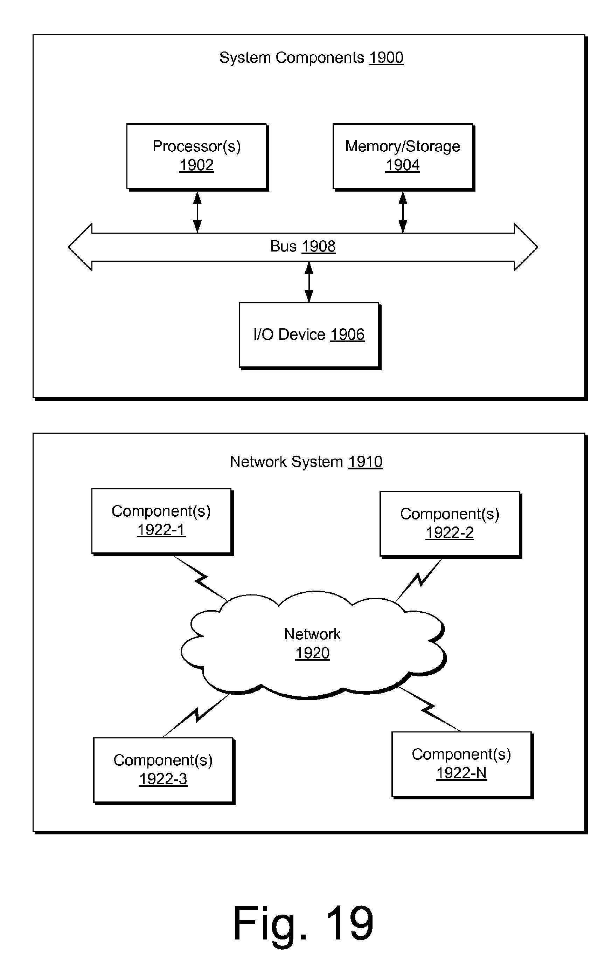

Fig. 19 shows components of an example of a computing system 1900 (e.g., or computing device) and an example of a networked system 1910. The system 1900 includes one or more processors 1902, memory and/or storage components 1904, one or more input and/or output devices 1906 and a bus 1908. In an example embodiment, instructions may be stored in one or more computer-readable media (e.g., memory/storage components 1904). Such instructions may be read by one or more processors (e.g., the processor(s) 1902) via a communication bus (e.g., the bus 1908), which may be wired or wireless. The one or more processors may execute such instructions to implement (wholly or in part) one or more modules, components, etc. (e.g., as part of a method). A user may view output from and interact with a process via an I/O device (e.g., the device 1906). In an example embodiment, a computer-readable medium may be a storage component such as a physical memory storage device, for example, a chip, a chip on a package, a memory card, etc.

In an example embodiment, components may be distributed, such as in the network system 1910. The network system 1910 includes components 1922-1, 1922-2, 1922-3, ... 1922-N. For example, the components 1922-1 may include the processor(s) 1902 while the component(s) 1922-3 may include memory accessible by the processor(s) 1902. Further, the component(s) 1902-2 may include an I/O device for display and optionally interaction with a method. The network may be or include the Internet, an intranet, a cellular network, a satellite network, etc.

Although only a few example embodiments have been described in detail above, those skilled in the art will readily appreciate that many modifications are possible in the example embodiments. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112, paragraph 6 for any limitations of any of the claims herein, except for those in which the claim expressly uses the words "means for" together with an associated function.

## Claims

1. A method comprising:
receiving selection data;
transmitting an application programming interface (API) call to a geographic information system (GIS);
receiving a response to the API call from the GIS;
transmitting one or more search criteria to a search engine based at least in part on the response to the API call; and
receiving search results corresponding at least in part to the one or more search criteria.

2. The method of claim 1 further comprising: rendering at least a portion of information in the search results to a display.

3. The method of claim 1 further comprising: rendering GIS imagery to a display and making a selection with respect to the rendered GIS imagery.

4. The method of claim 3 wherein the receiving selection data is responsive to making the selection with respect to the rendered GIS imagery.

5. The method of claim 1 wherein the receiving selection data comprises receiving coordinates associated with a three-dimensional model.

6. The method of claim 5 wherein the three-dimensional model comprises a model of a reservoir.

7. The method of claim 5 wherein the three-dimensional model comprises surfaces wherein the surfaces comprise an uppermost surface that corresponds to a surface of the Earth.

8. The method of claim 7 wherein the receiving selection data comprises receiving coordinates associated with the uppermost surface.

9. The method of claim 1 wherein the receiving selection data comprises generating a two-dimensional extent from a three-dimensional surface.

10. The method of claim 1 further comprising establishing a network communication link with the GIS prior to receiving selection data.

11. The method of claim 10 maintaining the network communication link and transmitting another API call to the GIS.

12. The method of claim 1 further comprising loading a plugin module into memory of a computing device wherein the plugin module is operable in a project framework executing on the computing device for linking the project framework to the GIS and for structuring data from the GIS as one or more search criteria for the search engine associated with the project framework.

13. A method comprising:
orienting a plane in a three-dimensional view rendered to a display;
constructing rays from the plane to a surface in the three-dimensional view;
determining a two-dimensional extent based at least in part on intersection points of the rays and the surface in the three-dimensional view;
transmitting the two-dimensional extent as an application programming interface (API) call; and
responsive to transmitting the API call, receiving information based at least in part on the two-dimensional extent.

14. The method of claim 13 further comprising rendering a new view to the display based at least in part on the received information.

15. The method of claim 13 further comprising receiving an instruction to alter the new view rendered to the display and responsive to the instruction, re-orienting the plane in the new view.

16. The method of claim 13 wherein the information comprises GIS image data.

17. The method of claim 13 wherein the orienting a plane in a three-dimensional view rendered to a display orients the plane with respect to a three-dimensional view of three-dimensional model data for a geologic environment.

18. The method of claim 13 wherein the transmitting the extent comprises transmitting the extent as part of a search filter or search field.

19. The method of claim 13 further comprising establishing a network communication link with the GIS prior to transmitting the API call, maintaining the network communication link and transmitting another API call to the GIS for a different two-dimensional extent.

20. The method of claim 13 further comprising loading a plugin module into memory of a computing device wherein the plugin module is operable in a project framework executing on the computing device for determining the two-dimensional extent based on manipulation of a view of a visualization of at least a portion of a three-dimensional model associated with the project framework wherein the manipulation of the view defines the plane.

21. A method comprising:
receiving image data, for a specified two-dimensional extent, from a geographic information system;
defining a two-dimensional grid for the specified two-dimensional extent;
generating a texture by assigning the image data to the two-dimensional grid;
generating a three-dimensional grid by sampling elevations of a seismic surface and assigning the sampled elevations to the two-dimensional grid;
applying the texture to the three-dimensional grid; and
rendering the three-dimensional grid with the applied texture to a display.

22. The method of claim 21 wherein the image data comprises GIS image data.

23. The method of claim 21 further comprising receiving an adjustment to the specified two-dimensional extent and requesting additional image data based at least in part on the adjustment to the specified two-dimensional extent.

24. The method of claim 23 further comprising constructing an API call based in part on receipt of an adjustment to the specified two-dimensional extent wherein the API call conforms to an API specification of a GIS.

25. The method of claim 22 further comprising establishing a network communication link with a GIS prior to receiving the GIS image data, maintaining the network communication link, and receiving additional GIS image data for a different two-dimensional extent via the network communication link.

26. The method of claim 21 further comprising rendering the received image data in a two-dimensional planar view to the same display or to another display.

27. The method of claim 21 further comprising, responsive to zooming, rendering a zoomed view of the three-dimensional grid with the applied texture to the display.

28. The method of claim 27 further comprising determining a two-dimensional extent for the zoomed view and receiving image data based at least in part on the two-dimensional extent for the zoomed view wherein the received image data based at least in part on the two-dimensional extent for the zoomed view comprises a higher resolution than the previously received image data.

29. The method of claim 21 further comprising, responsive to panning, determining a two-dimensional extent for a panned view and receiving additional image data based at least in part on the two-dimensional extent for the panned view.

30. The method of claim 21 further comprising loading a plugin module into memory of a computing device wherein the plugin module is operable in a project framework executing on the computing device for linking the project framework to a geographic information system and for applying image data from the geographic information system as a texture on to a seismic surface of a project associated with the project framework.
